# EUROPÄISCHE PATENTSCHRIFT

(11) **EP 3 038 993 B1**
(45) Veröffentlichungstag und Bekanntmachung des Hinweises auf die Patenterteilung: **31.05.2017**
(21) Anmeldenummer: 14753032.3
(22) Anmeldetag: 05.08.2014
(51) Int. Cl.: C04B 26/32, C08L 83/04

(54) **HÄRTBARE ORGANOPOLYSILOXANZUSAMMENSETZUNGEN**
CURABLE ORGANOPOLYSILOXANE COMPOSITIONS
COMPOSITIONS ORGANOPOLYSILOXANE DURCISSABLES

(30) Priorität: 28.08.2013 DE 102013217220
(43) Veröffentlichungstag der Anmeldung: 06.07.2016
(73) Patentinhaber: Wacker Chemie AG, 81737 München (DE)
(72) Erfinder: OSTENDORF, Detlev, 01129 Dresden (DE); SCHEIM, Uwe, 01640 Coswig (DE); SCHILDBACH, Daniel, 84503 Altötting (DE)
(74) Vertreter: Budczinski, Angelika
(86) Internationale Anmeldenummer: PCT/EP2014/066835
(87) Internationale Veröffentlichungsnummer: WO 2015/028267

(56) Entgegenhaltungen:
- DE-T2- 69 300 933

## Beschreibung

Die Erfindung betrifft härtbare Organopolysiloxanzusammensetzungen, Verfahren zu deren Herstellung sowie deren Verwendung, insbesondere zur Herstellung künstlicher Steine.

Künstliche Steine bestehend aus 5-80 Gew.-% mit geeigneten Katalysatoren vernetzbaren organischen Polymerharzen und 20-95 Gew.-% Füllstoffen, wie beispielsweise Siliciumdioxid enthaltende Stoffe (Quarz, Quarzit, Granit, Porphyr, Sand, Silikate, Tonerde usw.), Calciumcarbonat enthaltende Stoffe (Marmor, Kalkgestein, Dolomit, usw.), Calcium- oder Bariumsulfat, Aluminiumoxid, Aluminiumtrihydrat, Magnesiumoxid, Magnesiumhydroxid, Zinkoxid und Siliciumcarbid enthaltende Stoffe sind seit langem bekannt. Hierzu sei beispielsweise auf US-A 4,643,921 inkl. der darin zitierten Literatur verwiesen.

Als Polymerharzbasis kommt hierbei z.B. in der "Bretonstone®"-bzw. Silestone®-Technologie ein radikalisch vernetzbares Polyesterharz in Kombination mit einem Reaktivlösungsmittel wie Styrol oder Methylmethacrylat oder deren Gemische zum Einsatz. Hierzu sei beispielsweise auf US-A 2008/0296795 inkl. der darin zitierten Literatur verwiesen.

Des Weiteren gibt es künstliche Steine, die statt des Polyesterharzes Methacrylatharze enthalten, wie beispielsweise in US-A 2011/0207849 beschrieben, wobei die in dieser Veröffentlichung zum Stand der Technik aufgeführten Schriften ebenfalls zum Offenbarungsgehalt der vorliegenden Erfindung für die erwähnten organischen Polymerharzbinder auf Basis Polyesterharz beziehungsweise Methacrylatharze zu zählen sind.

Weiterhin werden z.B. in US-A 2009/0253829 epoxidierte Triglyceride aus natürlichen Quellen in Gegenwart von cyclischen, alkylsubstituierten Carbonsäureanhydriden als Harzbasis beschrieben; aber auch Melamin-Harze kommen als Polymerharzbasis in künstlichen Steinen zum Einsatz (US-A 3,670,060).

Nachteil aller bisher bekannten Lösungen ist, dass die Bindemittel nur begrenzte Beständigkeit gegenüber UV-Strahlung und Bewitterung zeigen. Das ist nach außen hin sichtbar, da - insbesondere bei dunklen Farbtönen - die Farben der künstlichen Steine deutlich aufgehellt werden und darüber hinaus auch deren Glanz verloren geht. Darüber hinaus ist die Polymermatrix nicht hitzestabil, d.h. die Polymere depolymerisieren unter starker Verfärbung. Außerdem ist die ausgehärtete organische Polymermatrix trotz hoher Füllstoffgehalte entflammbar und brennt mitunter mit stark rußender Flamme.

Gefüllte Massen auf Basis von Organosiloxanen sind in der Literatur ebenfalls beschrieben. So beansprucht DD-A 103 252 ein Verfahren zur Herstellung von Pressmassen auf der Basis linearer Organopolysiloxane. DE-A 2 504 357 beschreibt Siliconharzformmassen, deren vernetzungsfähige Harzbasis sich aus Organopolysiloxan mit mindestens 1,0 Gew.-% Si-gebundenen OH-Gruppen und einem linearen Diorganopolysiloxan mit OH- oder Triorganosilyl-Endgruppen zusammensetzt. In US-A 3,108,985 werden Phenyl-alkylsiloxane als Harzbasis beansprucht. Nachteilig für alle ist, dass trotz hoher Aushärtetemperaturen nur verhältnismäßig niedrige Härten der Prüfkörper erreicht werden. Darüber hinaus kommen gesundheitsschädliche Bleiverbindungen als Katalysator zum Einsatz.

Gegenstand der Erfindung sind härtbare Zusammensetzungen enthaltend
(A1) Harzkomponente bestehend aus mindestens einem Organopolysiloxanharz bestehend aus Einheiten der Formel

   Rₐ(OH)_{b}(R¹O)_{c}SiO_{(4-a-b-c)/2} (I),

   worin
   R gleich oder verschieden sein kann und einen einwertigen, SiC-gebundenen, gegebenenfalls mit Halogenatom substituierter Kohlenwasserstoffrest oder Si-gebundenes Halogenatom bedeutet,
   R¹ gleich oder verschieden sein kann und einen einwertigen, gegebenenfalls substituierten Kohlenwasserstoffrest bedeutet,
   a 0, 1, 2 oder 3 ist,
   b 0, 1, 2 oder 3 ist und
   c 0, 1, 2 oder 3 ist,
   mit der Maßgabe, dass in Formel (I) die Summe a+b+c≤3 ist,
   in der Harzkomponente (A1) in mindestens 2% aller Einheiten der Formel (I) b≥1 ist,
   in der Harzkomponente (A1) in höchstens 10% aller Einheiten der Formel (I) c≥1 ist,
   in der Harzkomponente (A1) in maximal 50% der Einheiten der Formel (I) a=2 beträgt und
   die Harzkomponente (A1) ein mittleres Molekulargewicht Mw (Gewichtsmittel) von 500 g/mol bis 11000 g/mol und ein mittleres Molekulargewicht Mn (Zahlenmittel) von 500 g/mol bis 5000 g/mol aufweist sowie die Polydispersität (Mw/Mn) der Harzkomponente (A1) 1 bis 5 beträgt,
(A2) Organosiliciumkomponente bestehend aus mindestens einer Organosiliciumverbindung bestehend aus Einheiten der Formel

   R²_{d}(OH)ₑ(R³O)_{f}SiO_{(4-d-e-f)/2} (II),

   worin
   R² gleich oder verschieden sein kann und einen einwertigen, SiC-gebundenen, gegebenenfalls mit Halogenatom substituierten Kohlenwasserstoffrest oder Si-gebundenes Halogenatom bedeutet,
   R³ gleich oder verschieden sein kann und einen einwertigen, gegebenenfalls substituierten Kohlenwasserstoffrest bedeutet,
   d 0, 1 oder 2 ist,
   e 0, 1, 2 oder 3 ist und
   f 0, 1, 2 oder 3 ist,
   mit der Maßgabe, dass die Summe in Formel (II) d+e+f≤4 ist,
   in der Organosiliciumkomponente (A2) in mindestens 10 % aller Einheiten der Formel (II) f≥1 ist,
   in der Organosiliciumkomponente (A2) in höchstens 2 % aller Einheiten der Formel (II) e≥1 ist und
   in der Organosiliciumkomponente (A2) in maximal 50 % der Einheiten der Formel (II) mit d+e+f≤3 d=2 beträgt,
   und
(B) mindestens einen Füllstoff.

In der vorliegenden Erfindung werden Gewichtsmittel Mw und Zahlenmittel Mn durch Gelpermeationschromatographie (GPC bzw. Size Exclusion Chromatographie (SEC)) entsprechend DIN 55672-1 bestimmt mit Polystyrol Standard und Brechungsindexdetektor (RI-Detektor). Wo nicht anders ausgewiesen wird THF als Elutionsmittel für phenylhaltige Komponenten und Toluol als Elutionsmittel für nicht-phenylhaltige Komponenten verwendet, und die Analysen werden bei einer Säulentemperatur von 45°C durchgeführt. Die Polydispersität ist der Quotient Mw/Mn.

Die erfindungsgemäß eingesetzte Harzkomponente (A1) weist ein Gewichtsmittel Mw von bevorzugt 500 bis 9000 g/mol, besonders bevorzugt von 1000 bis 9000 g/mol, insbesondere von 1500 bis 7000 g/mol, auf.

Die erfindungsgemäß eingesetzte Harzkomponente (A1) weist ein Zahlenmittel Mn von bevorzugt 500 bis 3500 g/mol, besonders bevorzugt von 1000 bis 3500 g/mol, insbesondere von 1000 bis 2500 g/mol, auf.

Die erfindungsgemäß eingesetzte Harzkomponente (A1) weist Polydispersitäten Mw/Mn von bevorzugt 1 bis 4, besonders bevorzugt von 1,2 bis 3,6, auf.

In bevorzugt 2 bis 5 % aller Einheiten der Formel (I) in der erfindungsgemäß eingesetzten Harzkomponente (A1) ist b≥1.

In der Harzkomponente (A1) ist in bevorzugt höchstens 8 %, besonders bevorzugt höchstens 6 %, aller Einheiten der Formel (I) c≥1.

In der erfindungsgemäß eingesetzten Komponente (A1) sind bevorzugt höchstens 30 %, besonders bevorzugt höchstens 10 %, insbesondere höchstens 4 %, der Einheiten der Formel (I) solche mit a=2.

Die erfindungsgemäß eingesetzte Harzkomponente (A1) kann nur eine Art von Siloxan bestehend aus Einheiten der Formel (I) enthalten wie auch Gemische unterschiedlicher Arten von Siloxanen bestehend aus Einheiten der Formel (I), wobei Gemische bevorzugt sind. In den Siloxanmolekülen sind die Einheiten der Formel (I) bevorzugt statistisch verteilt.

Beispiele für einwertige, SiC-gebundene Kohlenwasserstoffreste R sind Alkylreste, wie der Methyl-, Ethyl-, n-Propyl-, iso-Propyl-, 1-n-Butyl-, 2-n-Butyl-, iso-Butyl-, tert-Butyl-, n-Pentyl-, iso-Pentyl-, neo-Pentyl-, tert-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl-, 2-Propenyl, n-5-Hexenyl-, 4-Vinylcyclohexyl- und der 3-Norbornenylrest; Arylreste, wie der Phenyl-, Biphenylyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Herstellungsbedingt kann auch ein gewisser Anteil der Reste R die Bedeutung von Halogenatom, insbesondere Chloratom, haben, was jedoch nicht bevorzugt ist.

Bevorzugt handelt es sich bei Rest R um einwertige, SiC-gebundene Kohlenwasserstoffreste mit 1 bis 18 Kohlenstoffatomen, besonders bevorzugt um den Methyl-, Ethyl-, Vinyl- oder Phenylrest.

Beispiele für Rest R¹ sind die für R genannten Reste.

Bevorzugt handelt es sich bei Rest R¹ um einwertige Kohlenwasserstoffreste mit 1 bis 18 Kohlenstoffatomen, besonders bevorzugt um den Methyl-, Ethyl-, n-Propyl-, iso-Propyl-, n-Butyl-, sec-Butyl-, tert-Butyl- oder iso-Butylrest, insbesondere um den Methyl- oder Ethylrest.

Bevorzugt handelt es sich bei der erfindungsgemäß eingesetzten Komponente (A1) um eine Harzkomponente (A1-1) bestehend aus mindestens einem Organopolysiloxanharz bestehend aus Einheiten der Formeln

RSiO_{3/2} (III)

und

RSi(OH)O_{2/2} (IV)

sowie gegebenenfalls Einheiten ausgewählt aus der Gruppe bestehend aus Einheiten der Formeln

RSi(OR¹)O_{2/2} (V),

RSi(OR¹)₂O_{1/2} (VI),

R₂SiO_{2/2} (VII)

und

R₂Si(OH)O_{1/2} (VIII),

worin R und R¹ eine der obengenannten Bedeutungen haben und mit der Maßgabe, dass
in der Harzkomponente (A1-1) die Summe der Einheiten der Formeln (IV) und (VIII) bezogen auf die Gesamtzahl aller Einheiten der Formeln (III) bis (VIII) mindestens 2 % beträgt,
in der Harzkomponente (A1-1) die Summe der Einheiten der Formeln (V) und (VI) bezogen auf die Gesamtzahl aller Einheiten der Formeln (III) bis (VIII) höchstens 10 % beträgt,
in der Harzkomponente (A1-1) die Summe der Einheiten der Formeln (VII) und (VIII) bezogen auf die Gesamtzahl aller Einheiten der Formeln (III) bis (VIII) maximal 50 % beträgt und
die Harzkomponente (A1-1) ein mittleres Molekulargewicht Mw von 500 g/mol bis 11000 g/mol und ein mittleres Molekulargewicht Mn von 500 g/mol bis 5000 g/mol aufweist sowie die Polydispersität (Mw/Mn) der Harzkomponente (A1-1) 1 bis 5 beträgt.

Beispiele für die bevorzugten Harzkomponenten (A1-1) sind (MeSiO_{3/2})_{0,88}(MeSi(OH)O_{2/2})_{0,05}(MeSi(OEt)O_{2/2})_{0,06}(MeSiO_{2/2})_{0,01} mit Mw = 6600 g/mol, Mn = 2000 g/mol und Mw/Mn = 3,3; (MeSiO_{3/2})_{0,86}(MeSi(OH)O_{2/2})_{0,02}(MeSi(OEt)O_{2/2})_{0,10}(Me₂SiO_{2/2})_{0,02} mit Mw = 10000 g/mol, Mn = 2300 g/mol und Mw/Mn = 4,3; (MeSiO_{3/2})_{0,71}(MeSi(OH)O_{2/2})_{0,03}(MeSi(OEt)O_{2/2})_{0,05}(Me₂SiO_{2/2})_{0,21} mit Mw = 4500 g/mol, Mn = 1900 g/mol und Mw/Mn = 2,4; (MeSiO_{3/2})_{0,88}(MeSi(OH)O_{2/2})_{0,05}(MeSi(OMe)O_{2/2})_{0,06}(Me₂SiO_{2/2})_{0,01} mit Mw = 9000 g/mol, Mn = 2300 g/mol und Mw/Mn = 3,9; (MeSiO_{3/2})_{0,33}(MeSi(OH)O_{2/2})_{0,05}(MeSi(OEt)O_{2/2})_{0,01}(Me₂SiO_{2/2})_{0,06} (PhSiO_{3/2})_{0,24}(PhSi(OH)O_{2/2})_{0,28}(PhSi(OEt)O_{2/2})_{0,03} mit Mw = 3250 g/mol, Mn = 1300 g/mol und Mw/Mn = 2,5; (MeSiO_{3/2})_{0,34}(MeSi(OH)O_{2/2})_{0,03}(MeSi(OEt)O_{2/2})_{0,02}(PhSiO_{3/2})_{0,45} (PhSi(OH)O_{2/2})_{0,13}(PhSi(OEt)O_{2/2})_{0,03} mit Mw = 4700 g/mol, Mn = 1800 g/mol und Mw/Mn = 2,6; (MeSiO_{3/2})_{0,27}(MeSi(OH)O_{2/2})_{0,03}((PhSiO_{3/2})_{0,34}(PhSi(OH)O_{2/2})_{0,14} PhSi(OEt)O_{2/2})_{0,02}(PhMeSiO_{2/2})_{0,17}(PhMeSi(OH)O_{1/2})_{0,03} mit Mw = 2400 g/mol, Mn = 1200 g/mol und Mw/Mn = 2,0; (PhSiO_{3/2})_{0,45}(PhSi(OH)O_{2/2})_{0,44}(PhSi(OEt)O_{2/2})_{0,09}(PhSi(OH)₂O_{1/2})_{0,02} mit Mw = 2900 g/mol, Mn = 1500 g/mol und Mw/Mn = 1,9; (PhSiO_{3/2})_{0,48}(PhSi(OH)O_{2/2})_{0,17}(PhSi(OEt)O_{2/2})_{0,02} (CH₃(CH₂)₂SiO_{3/2})_{0,25}(CH₃(CH₂)₂Si(OH)O_{2/2})_{0,08} mit Mw = 1800 g/mol, Mn = 1250 g/mol und Mw/Mn = 1,4; (MeSiO_{3/2})_{0,32}(MeSi(OH)O_{2/2})_{0,06}(MeSi(OEt)O_{2/2})_{0,01}(Me₂SiO_{2/2})_{0,06} (PhSiO_{3/2})_{0,23}(PhSi(OH)O_{2/2})_{0,29}(PhSi(OEt)O_{2/2})_{0,03} mit Mw = 1700 g/mol, Mn = 1200 g/mol und Mw/Mn = 1,4; (PhSiO_{3/2})_{0,50}(PhSi(OH)O_{2/2})_{0,15}(PhSi(OEt)O_{2/2})_{0,02}(CH₃(CH₂)₂SiO_{3/2})_{0,26} (CH₃(CH₂)₂Si(OH)O_{2/2})_{0,07} mit Mw = 2800 g/mol, Mn = 1200 g/mol und Mw/Mn = 2,3; (MeSiO_{3/2})_{0,81}(MeSi(OH)O_{2/2})_{0,04}(MeSi(OEt)O_{2/2})_{0,05}(Me₂SiO_{2/2})_{0,10} mit Mw = 6500 g/mol, Mn = 1900 g/mol und Mw/Mn = 3,4; und (MeSiO_{3/2})_{0,88}(MeSi(OH)O_{2/2})_{0,05}(MeSi(OMe)O_{2/2})_{0,06}(Me₂SiO_{2/2})_{0,01} mit Mw = 6700 g/mol, Mn = 2100 g/mol und Mw/Mn = 3,2; wobei Me gleich Methylrest, Et gleich Ethylrest und Ph gleich Phenylrest bedeutet.

Des Weiteren bevorzugt handelt es sich bei der erfindungsgemäß eingesetzten Komponente (A1) um eine Harzkomponente (A1-2) bestehend aus mindestens einem Organopolysiloxanharz bestehend aus Einheiten der Formeln

SiO_{4/2} (XVII),

R₃SiO_{1/2} (XVIII)

und

Si(OH)O_{3/2} (XIX)

sowie gegebenenfalls Einheiten ausgewählt aus der Gruppe bestehend aus Einheiten der Formeln

Si(OR¹)O_{3/2} (XX),

Si(OR¹)₂O_{2/2} (XXI),

Si(OR¹)₃O_{1/2} (XXII),

Si(OH)₂O_{2/2} (XXIII)

und

Si(OH)₃O_{1/2} (XXIV),

worin R und R¹ eine der obengenannten Bedeutungen haben und mit der Maßgabe, dass
in der Harzkomponente (A1-2) die Summe der Einheiten der Formeln (XIX), (XXIII) und (XXIV) bezogen auf die Gesamtzahl aller Einheiten der Formeln (XVII) bis (XXIV) mindestens 2 % beträgt, in der Harzkomponente (A1-2) die Summe der Einheiten der Formeln (XX), (XXI) und (XXII) bezogen auf die Gesamtzahl aller Einheiten der Formeln (XVII) bis (XXIV) höchstens 10% beträgt, die Harzkomponente (A1-2) ein mittleres Molekulargewicht Mw von 500 g/mol bis 11 000 g/mol und ein mittleres Molekulargewicht Mn von 500 g/mol bis 5 000 g/mol aufweist sowie die Polydispersität (Mw/Mn) der Harzkomponente (A1-2) 1 bis 5 beträgt.

Beispiele für die bevorzugten Organopolysiloxanharze (A1-2) sind
(SiO_{4/2})_{0,50}(Me₃SiO_{1/2})_{0,39}(Si(OEt)O_{3/2})_{0,06}(Si(OEt)₂O_{2/2})_{0,02} (Si(OEt)₃O_{1/2})_{0,01}(Si(OH)O_{3/2})_{0,02}
mit Mw = 7400 g/mol, Mn = 3100 g/mol und Mw/Mn = 2,4;
(SiO_{4/2})_{0,45}(Me₃SiO_{1/2})_{0,43}(Si(OEt)O_{3/2})_{0,07}(Si(OEt)₂O_{2/2})_{0,02} (Si(OEt)₃O_{1/2})_{0,01}(Si(OH)O_{3/2})_{0,02}
mit Mw = 1400 g/mol, Mn = 900 g/mol und Mw/Mn = 1,6;
(SiO_{4/2})_{0,45}(Me₃SiO_{1/2})_{0,36}(ViMe₂SiO_{1/2})_{0,06}(Si(OEt)O_{3/2})_{0,06} (Si(OEt)₂O_{2/2})_{0,02}(Si(OEt)₃O_{1/2})_{0,01}(Si(OH)O_{3/2})₀,₀₄
mit Mw = 5300 g/mol, Mn = 2600 g/mol und Mw/Mn = 2,0; und (SiO_{4/2})_{0,38}(Me₃SiO_{1/2})_{0,42}(ViMe₂SiO_{1/2})_{0,06}(Si(OEt)O_{3/2})_{0,07}
(Si(OEt)₂O_{2/2})_{0,02}(Si(OEt)₃O_{1/2})_{0,01}(Si(OH)O_{3/2})_{0,04}
mit Mw = 2600 g/mol, Mn = 1600 g/mol und Mw/Mn = 1,6;
wobei Me gleich Methylrest, Vi gleich Vinylrest und Et gleich Ethylrest bedeutet.

Bei der erfindungsgemäß eingesetzten Komponente (A1) handelt es sich besonders bevorzugt um die Harzkomponente (A1-1).

Die Harzkomponente (A1) kann bei 23°C und 1013 hPa sowohl fest als auch flüssig sein, wobei sie bevorzugt fest ist.

Die erfindungsgemäß eingesetzten Verbindungen der Harzkomponente (A1) sind bereits bekannt und können nach beliebigen und bisher bekannten Methoden hergestellt werden, wie z.B. durch Hydrolyse und Kondensation von Mischungen der entsprechenden Chlorsilane, Alkoxysilane oder teilalkoxylierten Chlorsilane.

Insbesondere handelt es sich bei Komponente (A1) um Harze herstellbar durch Umsetzung der entsprechenden in Toluol gelösten Chlorsilane, bevorzugt Methyltrichlorsilan, Phenyltrichlorsilan, Phenylmethyldichlorsilan, Dimethyldichlorsilan, Trimethylchlorsilan und/oder Tetrachlorsilan, mit einem stöchiometrischen Unterschuss an Alkohol, bezogen auf die Anzahl an Si-Cl-Bindungen, wobei HCl zumindest zum Teil entweicht, und anschließender Umsetzung mit einem stöchiometrischen Überschuss an Wasser, bezogen auf die Summe der Si-Cl- und Si-Alkoxy-Bindungen, und nachfolgender Trennung der wässrigen und organischen Phase sowie Abtrennung des Toluols und Alkohols aus der organischen Phase.

Die erfindungsgemäß eingesetzte Organosiliciumkomponente (A2) kann nun eine Art von Organosiliciumverbindung bestehend aus Einheiten der Formel (II) enthalten wie auch Gemische unterschiedlicher Arten von Organosiliciumverbindungen bestehend aus Einheiten der Formel (II). Falls Komponente (A2) Siloxane enthält, sind in den Siloxanmolekülen die Einheiten der Formel (II) bevorzugt statistisch verteilt.

Bei der erfindungsgemäß eingesetzten Organosiliciumkomponente (A2) kann es sich sowohl um Silane (A2-1) handeln, d.h. Verbindungen der Formel (II) mit d+e+f=4, als auch um Siloxane (A2-2), d.h. Verbindungen enthaltend Einheiten der Formel (II) mit d+e+f≤3.

Die erfindungsgemäß eingesetzte Organosiliciumkomponente (A2-2) weist ein Gewichtsmittel Mw von vorzugsweise 500 bis 5000 g/mol, bevorzugt von 500 bis 4000 g/mol, besonders bevorzugt von 700 bis 4000 g/mol, insbesondere von 700 bis 3000 g/mol, auf.

Die erfindungsgemäß eingesetzte Organosiliciumkomponente (A2-2) weist ein Zahlenmittel Mn von vorzugsweise 200 bis 3000 g/mol, bevorzugt von 200 bis 2000 g/mol, besonders bevorzugt von 200 bis 1500 g/mol, insbesondere von 500 bis 1500 g/mol, auf.

Die erfindungsgemäß eingesetzte Organosiliciumkomponente (A2-2) weist Polydispersitäten von vorzugsweise 1 bis 5, bevorzugt von 1 bis 4, besonders bevorzugt von 1,2 bis 3,6, auf.

In der Organosiliciumkomponente (A2) ist bevorzugt in mindestens 25 %, besonders bevorzugt in mindestens 40 %, insbesondere in mindestens 50 %, aller Einheiten der Formel (II) f≥1.

In der Organosiliciumkomponente (A2) ist bevorzugt in höchstens 1%, besonders bevorzugt in höchstens 0,5 %, insbesondere in höchstens 0,1 %, aller Einheiten der Formel (II) e≥1.

In der Organosiliciumkomponente (A2) ist in bevorzugt maximal 10 %, besonders bevorzugt maximal 3 %, der Einheiten der Formel (II) mit d+e+f≤3 d=2.

Beispiele für einwertige, gegebenenfalls substituierte, SiC-gebundene Kohlenwasserstoffreste R² sind die für R genannten Reste sowie der n-Nonacosyl- und der n-Triacontyl-Rest.

Herstellungsbedingt kann auch ein gewisser Anteil der Reste R² die Bedeutung von Halogenatom, insbesondere Chloratom, haben, was jedoch nicht bevorzugt ist.

Bevorzugt handelt es sich bei Rest R² um einwertige, SiC-gebundene Kohlenwasserstoffreste mit 1 bis 18 Kohlenstoffatomen, besonders bevorzugt um den Methyl-, Ethyl-, 2,4,4-Trimethylpentyl-, n-Octyl- oder Phenylrest.

In der Organosiliciumkomponente (A2-1) hat R² besonders bevorzugt die Bedeutung von 2,4,4-Trimethylpentyl-, n-Octyl- oder Phenylrest.

In der Organosiliciumkomponente (A2-2) hat R² besonders bevorzugt die Bedeutung von Methyl-, Ethyl-, 2,4,4-Trimethylpentyl- oder Phenylrest.

Beispiele für Rest R³ sind die für R¹ genannten Reste.

Bevorzugt handelt es sich bei Rest R³ um einwertige Kohlenwasserstoffreste mit 1 bis 18 Kohlenstoffatomen, besonders bevorzugt um den Methyl-, Ethyl-, n-Propyl-, iso-Propyl-, n-Butyl-, sec-Butyl-, tert-Butyl- oder iso-Butylrest, insbesondere um den Methyl- und Ethylrest.

Bevorzugt handelt es sich bei den erfindungsgemäß eingesetzten Siloxanen (A2-2) um solche bestehend aus Einheiten der Formeln

R²Si (OR³)O_{2/2} (XII)

und

R²Si(OR³)₂O_{1/2} (XIII)

sowie gegebenfalls Einheiten ausgewählt aus der Gruppe bestehend aus Einheiten der Formeln

R²SiO_{3/2} (X),

R²Si (OH)O_{2/2} (XI),

R²₂SiO_{2/2} (XIV),

R²₂Si(OH)O_{1/2} (XV)

und

R²₂Si(OR³)O_{1/2} (XVI),

worin R² und R³ eine der oben genannten Bedeutungen haben und mit der Maßgabe, dass
in der Organosiliciumkomponente (A2-2) die Summe der Einheiten der Formeln (XII), (XIII) und (XVI) bezogen auf die Gesamtzahl aller Einheiten der Formel (X) bis (XVI) mindestens 10 %, bevorzugt mindestens 25 %, besonders bevorzugt mindestens 40 %, insbesondere mindestens 50 %, beträgt,
in der Organosiliciumkomponente (A2-2) die Summe der Einheiten der Formeln (XI) und (XV) bezogen auf die Gesamtzahl aller Einheiten der Formel (X) bis (XVI) höchstens 2 %, bevorzugt höchstens 1 %, besonders bevorzugt höchstens 0,5 %, insbesondere höchstens 0,1 %, beträgt sowie
in der Organosiliciumkomponente (A2-2) die Summe der Einheiten der Formeln (XIV), (XV) und (XVI) an der Gesamtzahl aller Einheiten der Formeln (X) bis (XVI) maximal 50 %, bevorzugt maximal 35 %, besonders bevorzugt maximal 10 %, insbesondere maximal 4 %, beträgt.

Beispiele für die erfindungsgemäß eingesetzten Siloxane (A2-2) sind
(MeSiO_{3/2})_{0,37}(MeSi(OEt)O_{2/2})_{0,46}(MeSi(OEt)₂O_{1/2})_{0,17}
   mit Mw = 2400 g/mol, Mn = 900 g/mol und Mw/Mn = 2,7;
(MeSiO_{3/2})_{0,37}(MeSi(OH)O_{2/2})_{0,01}(MeSi(OEt)O_{2/2})_{0,46}(MeSi(OEt)₂O_{1/2})_{0,15} (Me₂SiO_{2/2})_{0,01}
   mit Mw = 2800 g/mol, Mn = 1000 g/mol und Mw/Mn = 2,8;
(MeSiO_{3/2})_{0,29}(MeSi(OH)O_{2/2})_{0,01}(MeSi(OMe)O_{2/2})_{0,47}(MeSi(OMe)₂O_{1/2})_{0,23} mit Mw = 2300 g/mol, Mn = 600 g/mol und Mw/Mn = 3,8;
(MeSiO_{3/2})_{0,32}(MeSi(OMe)O_{2/2})_{0,48}(MeSi(OMe)₂O_{1/2})_{0,20}
   mit Mw = 3300 g/mol, Mn = 900 g/mol und Mw/Mn = 3,7;
(PhSiO_{3/2})_{0,23}(PhSi(OMe)O_{2/2})_{0,51}(PhSi(OMe)₂O_{1/2})_{0,26}
   mit Mw = 1000 g/mol, Mn = 700 g/mol und Mw/Mn = 1,4;
(MeSiO_{3/2})_{0,10}(MeSi(OMe)O_{2/2})_{0,17}(MeSi(OMe)₂O_{1/2})_{0,03}(PhSiO_{3/2})_{0,15}
   (PhSi(OMe)O_{2/2})_{0,31}(PhSi(OMe)₂O_{1/2})_{0,20}(Me₂SiO_{2/2})_{0,04}
   mit Mw = 1800 g/mol, Mn = 900 g/mol und Mw/Mn= 2,0;
(MeSiO_{3/2})_{0,10}(MeSi(OMe)O_{2/2})_{0,15}(MeSi(OMe)₂O_{1/2})_{0,03}
   (MeSi(O(CH₂)₃CH₃)O_{2/2})_{0,03}(PhSiO_{3/2})_{0,15}(PhSi(OMe)O_{2/2})_{0,24}
   (PhSi(OMe)₂O_{1/2})_{0,15}(PhSi(O(CH₂)₃CH₃)O_{2/2})_{0,06}
   (PhSi(OMe)(O(CH₂)₃CH₃)O_{1/2})_{0,04}(PhSi(O(CH₂)₃CH₃)₂O_{1/2})_{0,01}(Me₂SiO_{2/2})_{0,04} mit Mw = 1400 g/mol, Mn = 800 g/mol und Mw/Mn = 1,8;
(MeSiO_{3/2})_{0,31}(MeSi(OEt)O_{2/2})_{0,34}(MeSi(OEt)₂O_{1/2})_{0,10}(Me₂SiO_{2/2})_{0,22}
   (Me₂Si(OEt)O_{1/2})_{0,01}(Me₂Si(OH)O_{1/2})_{0,02}
   mit Mw = 4500 g/mol, Mn = 1900 g/mol und Mw/Mn = 2,4;
(i-OctSi(OMe)(OH)O_{1/2})_{0,01}(i-OctSi(OMe)O_{2/2})_{0,10}(i-OctSi-(OMe)₂O_{1/2})_{0,16}(MeSiO_{3/2})_{0,26}(MeSi(OMe)O_{2/2})_{0,36}(MeSi(OMe)₂O_{1/2})_{0,11}
   mit Mw = 3000 g/mol, Mn = 1500 g/mol und Mw/Mn = 2,0;
(Si(OEt)₂O_{2/2})_{0,42}(Si(OEt)O_{3/2})_{0,19}(Si(OEt)₃O_{1/2})_{0,39}
   mit Mw = 1000 g/mol, Mn = 800 g/mol und Mw/Mn = 1,2;
(Si(OEt)₂O_{2/2})_{0,48}(Si(OEt)O_{3/2})_{0,35}(Si(OEt)₃O_{1/2})_{0,09}(SiO_{4/2})_{0,08} mit Mw = 1400 g/mol, Mn = 900 g/mol und Mw/Mn = 1,6;
(i-OctSi(OMe)O_{2/2})_{0,09}(i-OCtSiO_{3/2})_{0,06}(i-OctSi(OMe)₂O_{1/2})_{0,08}((MeSiO_{3/2})_{0,23}(MeSi(OMe)O_{2/2})_{0,35}
   (MeSi(OMe)₂O_{1/2})_{0,19}
   mit Mw = 1400 g/mol, Mn = 600 g/mol und Mw/Mn = 2,3; und
(i-OctSi(OMe)O_{2/2})_{0,11}(i-OCtSiO_{3/2})_{0,05}(i-OctSi(OMe)₂O_{1/2})_{0,08}
   (MeSiO_{3/2})₀,₂₂(MeSi(OMe)O_{2/2})_{0,33}(MeSi(OMe)₂O_{1/2})_{0,20}
   (i-OctSi(OH)O_{2/2})_{0,01}
   mit Mw = 1500 g/mol, Mn = 700 g/mol und Mw/Mn = 2,1;
wobei Me gleich Methylrest, Et gleich Ethylrest, i-Oct gleich 2,4,4-Trimethylpentylrest und Ph gleich Phenylrest bedeutet.

In einer weiteren bevorzugten Ausführungsform kann es sich bei der erfindungsgemäß eingesetzten Komponente (A2) um Silane der Formel (II) handeln (A2-1), insbesondere um solche mit d gleich 1, e gleich 0 und f gleich 3.

Beispiele für Silane (A2-1) sind n-Octyltrimethoxysilan, n-Octyltriethoxysilan, (2,4,4-Trimethylpentyl)trimethoxysilan, (2,4,4-Trimethylpentyl)triethoxysilan, n-Hexadecyltrimethoxysilan, n-Hexadecyltriethoxysilan, n-Nonacosyltriethoxysilan, n-Nonacosyltrimethoxysilan, n-Triacontyltrimethoxysilan, n-Triacontyltriethoxysilan, Cyclohexyltrimethoxysilan, Cyclohexyltriethoxysilan, n-Hexadecylmethyldimethoxysilan, n-Hexadecylmethyldiethoxysilan, (2,4,4-Trimethylpentyl)methyldimethoxysilan, (2,4,4-Trimethylpentyl)methyldiethoxysilan, n-Octylmethyldimethoxysilan, n-Octylmethyldiethoxysilan, (Cyclohexyl)methyldimethoxysilan oder (Cyclohexyl)methyldiethoxysilan.

Die erfindungsgemäß eingesetzten Siliciumverbindungen (A2) können bei 23°C und 1013 hPa sowohl fest als auch flüssig sein, wobei Organosiliciumkomponente (A2) bevorzugt flüssig ist.

Die Viskosität der Organosiliciumkomponente (A2) beträgt bei 25°C bevorzugt weniger als 600 mPa·s, besonders bevorzugt im Falle von (A2-1) von 1 bis 50 mPa·s, besonders bevorzugt im Falle von (A2-2) von 5 bis 500 mPa·s.

Im Rahmen der vorliegenden Erfindung wird die dynamische Viskosität nach DIN 53019 bestimmt.

Bevorzugt liegt der Siedepunkt der erfindungsgemäß eingesetzten Organosiliciumkomponente (A2-1) im Bereich von 100 bis 370°C, besonders bevorzugt 100 bis 250°C, jeweils bei einem Druck von 1013 hPa.

Die erfindungsgemäß eingesetzten Siliciumverbindungen (A2) sind bereits bekannt und können nach beliebigen bisher bekannten Verfahren hergestellt werden. Diese Verfahren umfassen eine Auswahl und geeignete Kombination der Reaktionen Hydrolyse, Alkoholyse, Kondensation und Äquilibrierung, wie z.B. Alkoholyse von Chlorsilanen gegebenenfalls mit anschließender Hydrolyse und anschließender Kondensation. Bevorzugt werden die gewünschten Siliconbausteine in Form der Chlorsilane als Edukte für die Synthese als Ausgangsmaterialien eingesetzt. Bevorzugt wird bei der Alkoholyse Methanol oder Ethanol eingesetzt.

Bevorzugt handelt es sich bei Silanen (A2-1) um Siliciumverbindungen herstellbar durch Alkoholyse von Organyltrichlorsilan, Diorganyldichlorsilan oder von Tetrachlorsilan.

Bevorzugt handelt es sich bei Siloxanen (A2-2) um Siliciumverbindungen herstellbar durch Umsetzung von Organyltrichlorsilan ggf. im Gemisch mit Diorganyldichlorsilan und/oder von Tetrachlorsilan mit dem entsprechenden Alkohol (Alkoholyse) im stöchiometrischen Überschuss und Wasser (Hydrolyse, Kondensation) im stöchiometrischen Unterschuss, bezogen auf ursprünglich vorhandene Si-Cl-Bindungen.

Besonders bevorzugt handelt es sich bei Siloxanen (A2-2) um Siliciumverbindungen herstellbar durch Alkoholyse, Hydrolyse und Kondensation von Methyl-, Ethyl-, Vinyl-, n-Octyl-, 2,4,4-Trimethylpentyl-, cyclo-Hexyl- oder Phenyl-trichlorsilan gegebenenfalls mit Dimethyl-, Diethyl-, Ethylmethyl-, Divinyl-, Methylvinyl-, Ethylvinyl-, Phenylvinyl-, Di-(n-Octyl)-, Methyl-(n-Octyl)-, Ethyl-(n-Octyl)-, Phenyl-(n-Octyl)-, Vinyl-(n-Octyl)-, Bis(2,4,4-Trimethylpentyl)-, Methyl-(2,4,4-Trimethylpentyl)-, Ethyl-(2,4,4-Trimethylpentyl)-, Phenyl-(2,4,4-Trimethylpentyl)-, Vinyl-(2,4,4-Trimethylpentyl)-, Di-(cyclo-Hexyl)-, Methyl-(cyclo-Hexyl)-, Ethyl-(cyclo-Hexyl)-, Phenyl-(cyclo-Hexyl)-, Vinyl-(cyclo-Hexyl)-, Diphenyl-dichlorsilan und/oder von Tetrachlorsilan.

Insbesondere handelt es sich bei (A2-2) um Siliciumverbindungen herstellbar durch Alkoholyse, Hydrolyse und Kondensation von Methyl-, Ethyl- oder Phenyl-trichlorsilan und/oder -dichlorsilan und/oder Tetrachlorsilan.

Bei den erfindungsgemäßen Zusammensetzungen wird Komponente (A1) zu Komponente (A2) in einem Gewichtsverhältnis von bevorzugt 99:1 bis 50:50, besonders bevorzugt von 95:5 bis 60:40, insbesondere 90:10 bis 70:30, eingesetzt.

Eine Vormischung bestehend aus Komponenten (A1) und (A2) hat eine dynamische Viskosität bei 80°C von bevorzugt 1 bis 3000 mPa·s, besonders bevorzugt von 10 bis 1000 mPa·s.

Die erfindungsgemäßen Zusammensetzungen enthalten Komponenten (A1) und (A2) in einer Gesamtmenge von bevorzugt 1 bis 30 Gewichtsteilen, besonders bevorzugt 2 bis 15 Gewichtsteilen, insbesondere 5 bis 10 Gewichtsteilen, jeweils bezogen auf 100 Gewichtsteile der Zusammensetzung.

Bei den in den erfindungsgemäßen Massen eingesetzten Füllstoffen (B) kann es sich um beliebige, bisher bekannte Füllstoffe handeln.

Beispiele für Füllstoffe (B) sind nicht verstärkende Füllstoffe, also Füllstoffe mit einer BET-Oberfläche von vorzugsweise bis zu 50 m²/g, wie Quarzpulver, Quarzgranulat, geschmolzene Quarzpulver, Quarzglaspulver, Glaspulver, Diatomeenerde, Calciumsilikat, Magnesiumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, Calciumcarbonat, Marmormehl, Gips, Siliciumnitrid, Siliciumcarbid, Bornitrid, Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; Aluminium-trihydroxid, Magnesiumhydroxid, hohlkugelförmiger Füllstoffe, wie keramische Mikrokugel, wie z.B. solche erhältlich unter der Handelsbezeichnung Zeeospheres™ bei der Fa. 3M Deutschland GmbH in D-Neuss; faserförmige Füllstoffe, wie Wollastonit, Montmorrilonit, Bentonit sowie geschnittene und/oder gemahlene Fasern aus Glas (Glaskurzfasern), Mineralwolle oder Kunststoff. Die genannten Füllstoffe können hydrophobiert sein, beispielsweise durch die Behandlung mit Organosilanen bzw. -siloxanen oder mit Stearinsäure.

Bevorzugt handelt es sich bei den eingesetzten Füllstoffen (B) um anorganische Füllstoffe, besonders bevorzugt um anorganische siliciumhaltige Füllstoffe, insbesondere um solche aus natürlichen Quellen, wie Quarz, Cristobalit, Talkum, und um faserförmige siliciumhaltige Füllstoffe aus natürlichen Quellen wie Montmorillonit und Wollastonit, oder um synthetische siliciumhaltige Produkte wie pyrogene Kieselsäure, welche durch Flammenhydrolyse von z.B. Tetrachlorsilan in einer Knallgasflamme erhalten werden kann ("fumed silica") oder amorpher Quarz, welcher durch thermische Nachbehandlung von pyrogener Kieselsäure erhältlich ist ("fused silica") oder um anorganische faserförmige synthetische siliciumhaltige Füllstoffe wie geschnittene oder gemahlene Glaskurzfasern.

Ganz besonders bevorzugt handelt es sich bei Füllstoff (B) um Quarz, Cristobalit, geschnittene oder gemahlene Glaskurzfasern, Montmorillonit, Wollastonit oder Talk, die ggf. oberflächenbehandelt sein können.

Die Füllstoffe (B) können sowohl jeder einzeln als auch in beliebiger Mischung untereinander eingesetzt werden. Bevorzugt werden als Komponente (B) Mischungen aus feinteiligen und grobkörnigen Füllstoffen eingesetzt.

Die erfindungsgemäß eingesetzten feinteiligen Füllstoffe (B) weisen Korngrößen von bevorzugt 0,1 bis 200 µm, besonders bevorzugt 0,3 bis 100 µm, auf. Im Falle von faserförmigen Füllstoffen entspricht dies der längsten Ausdehnung der Faser.

Die erfindungsgemäß eingesetzten grobkörnigen Füllstoffe (B) weisen Korngrößen von bevorzugt 0,2 bis 5 mm, besonders bevorzugt von 0,2 bis 3 mm, auf. Als grobkörniger Füllstoff (B) wird insbesondere Quarz eingesetzt.

Wenn als Komponente (B) Mischungen aus feinteiligen und grobkörnigen Füllstoffen eingesetzt werden, dann beträgt das Gewichtsverhältnis von feinteiligen zu grobkörnigen Füllstoffen bevorzugt 5:1 bis 1:5, besonders bevorzugt 3:1 bis 1:3.

Die Korngrößenverteilung von Partikeln >500 µm wird bevorzugt mit einem Luftstrahlsieb e200 LS von der Firma ALPINE analysiert mit Analysensieben entsprechend den Anforderungen nach DIN ISO 3310-1. Die Analyse der Partikelgrößenverteilung im Bereich von etwa 0,02 bis 500 µm wird bevorzugt mit einem CILAS 1064 PARTICLE SIZE ANALYZER von der Firma Cilas durchgeführt.

Die erfindungsgemäßen Massen enthalten Füllstoffe (B) in Mengen von insgesamt bevorzugt 70 bis 99 Gewichtsteilen, besonders bevorzugt von 75 bis 95 Gewichtsteilen, insbesondere von 85 bis 95 Gewichtsteilen, jeweils bezogen auf 100 Gewichtsteile der Zusammensetzung.

Zusätzlich zu den Komponenten (A1), (A2) und (B) können die erfindungsgemäßen Massen weitere Stoffe enthalten, die unterschiedlich sind zu Komponenten (A1), (A2) und (B), wie z.B. Katalysatoren (C), weitere Bestandteile (D), Wasser (E) und Additive (F).

Beispiele für gegebenenfalls eingesetzte Katalysatoren (C) sind alle bisher bekannten Kondensationskatalysatoren, wie
Metallverbindungen, wie z.B. Aluminium(III)-neodecanoat, Aluminium(III)-stearat, Aluminium(III)-ethoxid, Aluminium(III)-octoat, Aluminium(III)-ethylhexanoat, Aluminium(III)-propoxid, Aluminium(III)-butoxid, Aluminium(III)-acetylacetonat, Aluminium-(III)-(9-octadecenylacetoacetate)-diisopropoxid, Zink(II)-stearat, Zink(II)-octoat, Zink(II)-(2-ethylhexanoat), Zink(II)-(acetylacetonat), Zink(II)-bis-(2,2,6,6-tetramethyl-3,5-heptandionat), Strontium(II)-(2-ethylhexanoat), Titan(IV)-bis(ethyl-acetoacetato)-bis(iso-butanolato), Titan(IV)-(n-butoxid), Titan(IV)-(t-butoxid), Zirconium(IV)-acetylacetonat, Zirconium-(IV)-(2-ethylhexanoat), Zirconium(IV)-lactat, Lithium(I)-octanoat, Bismuth(III)-(2-ethylhexanoat), Bismuth(III)-neodecanoat, Dioctylzinn(IV)-laurat, Dibutylzinn(IV)-laurat, Dimethylzinn-(IV)-laurat, Dioctylzinn(IV)-oxid, Dibutylzinn(IV)-oxid, Dimethylzinn(IV)-oxid, Dioctylzinn(IV)-acetat, Dibutylzinn(IV)-acetat, Verbindung erhältich durch Umsetzung von Dioctylzinn-(IV)-acetat mit Tetraethoxysilan, Verbindung erhältich durch Umsetzung von Dibutylzinn-(IV)-acetat mit Tetraethoxysilan, Zinn-(II)-octoat, Blei(II)-acetat, Blei(II)-octoat, Blei(II)-oxid, Blei(II)-sulfid, Blei(II)-carbonat, Nickel(II)-acetylacetonat, Nickel(II)-acetat, Nickel(II)-octoat, Nickel(II)-carbonat, Cobalt(II)-octoat, Cobalt(II)-carbonat, Mangan(II)-octoat, Mangan(II)-carbonat, Mangan(IV)-oxid;
Säuren, wie z.B. Carbonsäuren, Dicarbonsäuren, Organophosphorsäure und ihre Mono und Di-Ester, Phosphonsäuren und ihre Monoester und Diorganophosphinsäuren, Borsäure, Bor(III)-fluorid, Ammoniumsalze und Anhydride von Carbonsäuren;
Basen, wie z.B. Alkali- und Erdalkalihydroxid, Alkali- und Erdalkalialkoholat, Butyllithium, sowie Kaliumsiliconat;
siliciumfreie, stickstoffhaltige Verbindungen, wie z.B. primäre Amine, wie 1-Butylamin, sec-Butylamin, tert-Butylamin, 1-Hexylamin, Cyclohexylamin, 1-Octylamin, 1,1,3,3-Tetramethylbutylamin, 2-Ethylhexylamin, 2-Methyl-2-heptylamin; sekundäre Amine, wie Diethylamin, Di-n-butylamin, Piperidin, Piperazin, Pyrrolidin; tertiäre Amine, wie Triethylamin, Tri-n-butylamin, 1,4-Diazabicyclo[2.2.2]octan (DABCO); Amidine, wie Acetamidin, 1,4,5,6-Tetrahydropyrimidin, 1,5-Diazabicyclo[4.3.0]non-5-en (DBN), 1,8-Diazabicyclo[5.4.0]undec-7-en (DBU); Iminoharnstoffe, wie Guanidin, N-Methylguanidin, N,N'-Dimethylguanidin, N,N,N',N'-Tetramethylguanidin, N,N,N',N'-Tetramethyl-N"-(1,1-dimethylethyl)-guanidin, N-Methyl-N'-nitroguanidin, 1,8-Bis-(tetramethylguanidino)naphtalen (TMGN), Guanylguanidin, 1,5,7-Triazabicyclo[4.4.0]dec-5-en (TBD) und 7-Methyl-1,5,7-triazabicyclo(4.4.0)dec-5-en;
Aminosilane, wie N-Cyclohexylaminomethylmethyl-diethoxysilan, N-Cyclohexylaminomethylmethyl-dimethoxysilan, N-Cyclohexylaminomethyl-triethoxysilan, N-Cyclohexylaminomethyl-trimethoxysilan, N-Phenylaminomethyl-triethoxysilan, N-Phenylaminomethyltrimethoxysilan, N-(2-Aminoethyl)-3-aminopropyl-trimethoxysilan, N-(2-Aminoethyl)-3-aminopropyl-triethoxysilan, N-(2-Aminoethyl)-3-aminopropyl-methyltrimethoxysilan, N-(2-Aminoethyl)-3-aminopropyl-methyltriethoxysilan, N-Cyclohexyl-3-aminopropyl-triethoxysilan, N-Cyclohexyl-3-aminopropyl-trimethoxysilan, N-Cyclohexyl-3-aminopropyl-methyltriethoxysilan, N-Cyclohexyl-3-aminopropyl-methyltrimethoxysilan, 3-Aminopropyl-triethoxysilan, 3-Aminopropyl-trimethoxysilan, 3-Aminopropyl-methyltriethoxysilan und 3-Aminopropyl-methyltrimethoxysilan.

Bevorzugt handelt es sich bei dem gegebenenfalls eingesetzten Katalysator (C) um Bismuth(III)-(2-ethylhexanoat), Bismuth-(III)-neodecanoat, Dioctylzinn(IV)-laurat, Dibutylzinn(IV)-laurat, Dimethylzinn(IV)-laurat, Dioctylzinn(IV)-acetat, Dibutylzinn(IV)-acetat, Dimethylzinn(IV)-acetat, Zinn(II)-octoat, Zink(II)-acetylacetonat, Zirconium(IV)-(2-ethylhexanoat), Aluminium(III)-tert-butoxid, Lithiumhydroxid, Natriumhydroxid, Kaliumhydroxid, Calciumhydroxid, Lithiummethanolat, Natriummethanolat, Kaliummethanolat, Magnesiummethanolat, Calciummethanolat, Lithiumethanolat, Natriumethanolat, Kaliumethanolat, Magnesiumethanolat, Calciumethanolat, Kaliummethylsiliconat, 1,8-Diazabicyclo[5.4.0]undec-7-en, 1,5,7-Triazabicyclo[4.4.0]dec-5-en, 7-Methyl-1,5,7-triazabicyclo[4.4.0]-dec-5-en, N,N,N',N'-Tetramethylguanidin, N-(2-Aminoethyl)-3-aminopropyl-trimethoxysilan, N-(2-Aminoethyl)-3-aminopropyl-triethoxysilan, 3-Aminopropyl-trimethoxysilan, N-(2-Amino-ethyl)-3-aminopropyl-methyltrimethoxysilan, N-(2-Aminoethyl)-3-aminopropyl-methyltriethoxysilan, 3-Aminopropyl-methyltriethoxysilan und 3-Aminopropyl-methyltrimethoxysilan.

Insbesondere handelt es sich bei dem gegebenenfalls eingesetzten Katalysator (C) um Bismuth(III)-(2-ethylhexanoat), Bismuth-(III)-neodecanoat, Zinn(II)-octoat, Zink(II)-acetylacetonat, Kaliummethylsiliconat, 1,8-Diazabicyclo[5.4.0]undec-7-en, 1,5,7-Triazabicyclo[4.4.0]dec-5-en, 7-Methyl-1,5,7-triazabicyclo[4.4.0]dec-5-en und N,N,N',N'-Tetramethylguanidin.

Falls die erfindungsgemäßen Massen Katalysatoren (C) enthalten, handelt es sich um Mengen von vorzugsweise 0,0001 bis 10 Gewichtsteilen, besonders bevorzugt 0,0001 bis 5 Gewichtsteilen, insbesondere 0,0001 bis 2 Gewichtsteilen, jeweils bezogen auf 100 Gewichtsteile in Summe der Komponenten (A1) und (A2). Die erfindungsgemäßen Massen enthalten bevorzugt Katalysator (C).

Ganz besonders bevorzugt handelt es sich bei dem gegebenenfalls eingesetzten Katalysator (C) um 1,8-Diazabicyclo[5.4.0]undec-7-en, 1,5,7-Triazabicyclo[4.4.0]dec-5-en, 7-Methyl-1,5,7-triazabicyclo[4.4.0]dec-5-en, N,N,N',N'-Tetramethylguanidin in Mengen von 0,0001 bis 1 Gewichtsteilen bezogen auf 100 Gewichtsteile in Summe der Komponenten (A1) und (A2).

Beispiele für gegebenenfalls eingesetzte weitere Bestandteile (D) sind funktionelle Silane, wie Methacrylsilane, Glycidoxysilane und Mercaptosilane; Silikate, wie Natriumorthosilikat, Dinatriumdisilikat, Dinatriumtrisilikat, Kaliumsilikat, Calciumsilikat und Magnesiumsilikat.

Falls die erfindungsgemäßen Massen weitere Bestandteile (D) enthalten, handelt es sich um Mengen von vorzugsweise 1 bis 15 Gewichtsteilen, besonders bevorzugt 1 bis 10 Gewichtsteilen, jeweils bezogen auf 100 Gewichtsteile in Summe der Komponenten (A1) und (A2). Die erfindungsgemäßen Zusammensetzungen enthalten bevorzugt keine Komponente (D).

Beispiele für gegebenenfalls eingesetztes Wasser (E) sind alle Arten von Wasser, wie Regenwasser, vollentsalztes Wasser, als Kristallwasser gebunden in Salzen, wie Natriumsulfat-decahydrat, Aluminiumsulfat-octadecahydrat, Calciumsulfat-dihydrat, Dinatriummetasilikat-Nonahydrat, Dinatriummetasilikat-Pentahydrat; Wasser, adsorbiert an Zeolithe mit Porenweiten von 0,3 bis 1,5 nm, bevorzugt von 0,3 bis 1,0 nm; Wasser, gebunden an α-Cyclodextrin mit n = 6 Glucosemolekülen (Hohlraumdurchmesser/-höhe: 0,47 bis 0,53/0,79 nm), β-Cyclodextrin mit n = 7 Glucosemolekülen (Hohlraumdurchmesser/-höhe: 0,60 bis 0,65/0,79 nm) oder γ-Cyclodextrin mit n = 8 Glucosemolekülen (Hohlraumdurchmesser/-höhe: 0,75 bis 0,83/0,79 nm).

Falls die erfindungsgemäßen Massen Wasser (E) in ungebundener Form oder gebunden als Kristallwasser enthalten, handelt es sich um Mengen von vorzugsweise 0,1 bis 5 Gewichtsteilen, besonders bevorzugt 0,1 bis 2 Gewichtsteilen, insbesondere 0,1 bis 1 Gewichtsteilen, jeweils gerechnet als reines Wasser und bezogen auf 100 Gewichtsteile in Summe der Komponenten (A1) und (A2).
Falls die erfindungsgemäßen Massen Wasser (E) in gebundener Form in Zeolithen oder Cyclodextrinen enthalten, handelt es sich um Mengen von vorzugsweise 1 bis 10 Gewichtsteilen, besonders bevorzugt 1 bis 5 Gewichtsteilen, jeweils bezogen auf 100 Gewichtsteile in Summe der Komponenten (A1) und (A2). Die erfindungsgemäßen Massen enthalten bevorzugt keine Komponente (E).

Beispiele für erfindungsgemäß gegebenenfalls eingesetzte Additive (F) sind Pigmente, bevorzugt anorganische Pigmente wie Eisenoxide (gelb, schwarz, rot), Chrom(III)-oxid, und Titandioxid, Ruß; Farbstoffe, wie Phthalocyanine, Azoverbindungen; Effektpigmente zur Erzeugung eines Metallic-Effekts wie Plättchen aus Gold, Silber, Kupfer, Aluminium, Silicium, Glimmer, ggf. beschichtet z.B. mit FeTiO₃, Fe₂O₃, TiO₂, oder Flüssigkristallpigmente zur Erzeugung eines goniochromatischen Farbeffekts. Die Pigmente können in Pulverform oder dispergiert in einer geeigneten Flüssigkeit, besonders bevorzugt in einer flüssigen Komponente (A2), eingesetzt werden. Des Weiteren können die Pigmente auf die grobteiligen Füllstoffe (B) aufgezogen, als oberflächliche Beschichtung, eingesetzt werden.

Falls die erfindungsgemäßen Massen Additive (F) enthalten, handelt es sich um Mengen von vorzugsweise 1 bis 20 Gewichtsteilen, besonders bevorzugt 1 bis 15 Gewichtsteilen, insbesondere 1 bis 10 Gewichtsteilen, jeweils bezogen auf 100 Gewichtsteile in Summe der Komponenten (A1) und (A2). Die erfindungsgemäßen Massen enthalten bevorzugt Komponente (F).

Bei den erfindungsgemäßen Massen handelt es sich vorzugsweise um solche, enthaltend
(A1) Harzkomponente bestehend aus mindestens einem Organopolysiloxanharz bestehend aus Einheiten der Formel (I),
(A2) Organosiliciumkomponente bestehend aus mindestens einer Organosiliciumverbindung bestehend aus Einheiten der Formel (II),
(B) mindestens einen Füllstoff,
(C) mindestens einen Katalysator,
   gegebenenfalls
(D) weitere Bestandteile,
   gegebenenfalls
(E) Wasser und
   gegebenenfalls
(F) Additive.

Besonders bevorzugt handelt es sich bei den erfindungsgemäßen Massen um solche, enthaltend
(A1) Harzkomponente bestehend aus mindestens einem Organopolysiloxanharz (A1-1),
(A2) Organosiliciumkomponente bestehend aus mindestens einer Organosiliciumverbindung bestehend aus Einheiten der Formel (II),
(B) mindestens einen Füllstoff,
(C) mindestens einen Katalysator,
   gegebenenfalls
(D) weitere Bestandteile,
   gegebenenfalls
(E) Wasser und
   gegebenenfalls
(F) Additive.

Die erfindungsgemäßen Massen enthalten außer den Komponenten (A1), (A2), (B) sowie gegebenenfalls (C), (D), (E) und (F) vorzugsweise keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Ein weiterer Gegenstand der vorliegenden Erfindung ist ein Verfahren zur Herstellung der erfindungsgemäßen Zusammensetzungen durch Mischen der einzelnen Komponenten in beliebiger Reihenfolge.

In einer Ausführungsform des erfindungsgemäßen Verfahrens wird aus den Komponenten (A1) und (A2) eine Vormischung hergestellt, Komponente (B) zudosiert und anschließend die gegebenenfalls eingesetzten Komponenten (C) bis (F) zugefügt.

In einer weiteren Ausführungsform des erfindungsgemäßen Verfahrens wird Komponente (B) in einem Mischer vorgelegt, die Vormischung aus den Komponenten (A1) und (A2) zudosiert und anschließend die gegebenenfalls eingesetzten Komponenten (C) bis (F) zugefügt.

In einer weiteren Ausführungsform des erfindungsgemäßen Verfahrens wird Komponente (B) mit Komponente (A2) vorgemischt und anschließend Komponente (A1) sowie anschließend die gegebenenfalls eingesetzten Komponenten (C) bis (F) zugefügt.

In einer weiteren Ausführungsform des erfindungsgemäßen Verfahrens wird Komponente (B) mit Komponente (A1) vorgemischt und anschließend Komponente (A2) sowie anschließend die gegebenenfalls eingesetzten Komponenten (C) bis (F) zugefügt.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 150°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Insbesondere findet beim erfindungsgemäßen Verfahren das Vermischen der Komponenten bei einer Temperatur statt, die mindestens 20 K unter dem Siedepunkt der eingesetzten Organosiliciumkomponente (A2) liegt.

Das erfindungsgemäße Verfahren kann kontinuierlich, diskontinuierlich oder semikontinuierlich durchgeführt werden.

Die erfindungsgemäßen Massen sind in einer bevorzugten Ausführungsform knetbare, bei Raumtemperatur sehr hochviskose Mischungen von kittähnlicher Konsistenz, die jedoch bei entsprechend hohem mechanischem Druck zum Fließen gebracht werden können.

Die erfindungsgemäßen Massen haben in einer weiteren bevorzugten Ausführungsform die Konsistenz von nassem Sand. Sie sind förderbar, z.B. auf Transportbändern und haben eine bis zur Weiterverarbeitung ausreichende Lagerfähigkeit.

Die erfindungsgemäßen Massen können durch mechanischen Druck bei Temperatur der Umgebung oder gegebenenfalls bei erhöhter Temperatur in beliebige Form gebracht werden.

Die erfindungsgemäßen Massen vernetzen bei Temperatur der Umgebung, üblicherweise Raumtemperatur, oder bei Temperaturen oberhalb Raumtemperatur durch Kondensationsreaktion unter Abspaltung von Alkohol und gegebenenfalls Wasser.

Durch Erhöhung der Temperatur kann eine Beschleunigung der Vernetzung bewirkt werden, so dass die Formgebung und die Vernetzung auch in einem gemeinsamen Schritt durchgeführt werden können.

Die erfindungsgemäßen Massen können für alle Zwecke eingesetzt werden, für die auch bisher vernetzbare Siliconmassen eingesetzt worden sind. Die Verarbeitung der erfindungsgemäßen Mischungen erfolgt nach bekannten Verfahren.

Ein weiterer Gegenstand der vorliegenden Erfindung sind Formkörper hergestellt durch Vernetzung der erfindungsgemäßen Zusammensetzungen.

Formkörper können aus den erfindungsgemäßen Mischungen zum Beispiel durch das an sich seit langem bekannte Verfahren des Spritzpressens hergestellt werden. Dazu wird die Mischung mit Hilfe von mechanischem Druck in ein entsprechendes Formnest injiziert. Die Form ist in der Regel zweigeteilt und wird während des Spritzpressvorgangs durch eine hydraulische Presse verschlossen. Die Form ist auf die gewünschte Temperatur vorgeheizt, wodurch einerseits das Fließen der Masse erleichtert wird und andererseits die Aushärtung beschleunigt wird. Nach Ende des Spritzpressvorganges wird die Form noch solange geschlossen gehalten, bis die Formkörper eine Konsistenz erreicht haben, die eine zerstörungsfreie Entnahme der Formkörper gestattet. Formnester für Prüfkörper sind zum Beispiel in DIN EN ISO 10724-1:2002-04 beschrieben.

Bei den erfindungsgemäßen Formkörpern handelt es sich bevorzugt um künstliche Steine.

Zur Herstellung von künstlichen Steinen wird bevorzugt wie folgt vorgegangen: die erfindungsgemäßen Massen werden dabei zunächst in eine Form gegeben, wobei zur Vermeidung von Gaseinschlüssen anschließend Unterdruck angelegt wird. Eine Verdichtung kann bereits in diesem Schritt stattfinden, indem bevorzugt die erfindungsgemäße Masse über die Formen in Vibration versetzt wird. Daran schließt sich eine weitere Verdichtung der Masse durch Aufbringen von mechanischem Druck an. Dieser Kompaktierungsprozess, d.h. die Verdichtung ggf. unter Vibration im Vakuum, dauert idealerweise mehrere Minuten, bevorzugt 2 bis 3 Minuten. Falls der Formkörper in der Form ausgehärtet wird, dann wird gleichzeitig mit einem der vorangegangenen Schritte oder anschließend die Form für einen Zeitraum von bevorzugt 30 bis 120 Minuten auf Temperaturen oberhalb Raumtemperatur, bevorzugt bei 50 bis 200°C, besonders bevorzugt bei 80 bis 160°C, insbesondere bei 80 bis 130°C, erwärmt. Danach wird der Formkörper der Form entnommen. Alternativ kann, was besonders bevorzugt ist, der noch nicht ausgehärtete Formkörper nach dem Abschluss der Formgebung, d.h. nach dem mechanischen Pressen, der Form entnommen werden und in einem anschließenden separaten Schritt in einem separaten Apparat bei den oben genannten Temperaturen und Zeiten ausgehärtet werden. Danach erfolgt vorteilhafterweise eine weitere Lagerung bei Umgebungstemperatur für eine Dauer von mindestens einer Stunde, bevorzugt von mindestens 10 Stunden, besonders bevorzugt von 24 bis 48 Stunden. Der so erhaltene Formkörper kann dann nach bekannten Verfahren weiterverarbeitet werden, wie z.B. durch Schleifen, Polieren der Oberflächen und Zuschneiden.

Ein weiterer Gegenstand der vorliegenden Erfindung ist ein Verfahren zur Herstellung von künstlichen Steinen, dadurch gekennzeichnet, dass die erfindungsgemäßen Zusammensetzungen geformt und vernetzen gelassen werden.

Die erfindungsgemäßen Formkörper haben eine Härte von bevorzugt mindestens 50 Shore D, besonders bevorzugt von mindestens 60 Shore D, insbesondere von mindestens 75 Shore D.

Die erfindungsgemäßen Formkörper zeigen bei Einwirkung von UV-Strahlung im Vergleich zu herkömmlichen Formkörpern auf Basis organischer Harze noch keine Farbveränderung (Gelbverfärbung von hellen Farbtönen oder Aufhellung dunkler Farbtöne), wenn bei den herkömmlichen Systemen bereits deutliche Veränderungen sichtbar werden.

Ferner haben die erfindungsgemäßen Zusammensetzungen den Vorteil, dass sie sich hervorragend zur Herstellung von künstlichen Steinen eignen.

Die erfindungsgemäßen Zusammensetzungen haben den Vorteil, dass bei der Verarbeitung keine gesundheitsschädlichen Emissionen in dem Umfang entstehen wie sie üblicherweise bei nach dem Stand der Technik eingesetzten Polyesterharzen, welche in Styrol gelöst sind, auftreten.

Die erfindungsgemäßen Formkörper haben den Vorteil, dass sie eine ausgezeichnete Hitzebeständigkeit aufweisen, sodass bei höherer thermischer Belastung von bis zu 200°C geringere oder keine Verfärbungen auftreten als es bei Formkörpern, die mit organischen Polyester- oder Acrylatharzen entsprechend dem gegenwärtigen Stand der Technik hergestellt werden, der Fall ist. Außerdem bleiben auch nach längerer thermischer Belastung bei sehr hohen Temperaturen (z.B. 1h bei 700°C) die mechanischen Eigenschaften weitgehend erhalten.

Die erfindungsgemäßen Formkörper haben den Vorteil, dass sie UV- und bewitterungsstabil sind.

Die erfindungsgemäßen Formkörper haben den Vorteil, dass sie bei hoher thermischer Belastung formstabil bleiben und somit nicht die Gefahr des Ablösens von heißem und/oder brennendem festem und/oder flüssigem Material besteht.

In den nachstehend beschriebenen Beispielen beziehen sich alle Viskositätsangaben, sofern nicht anders angegeben, auf eine Temperatur von 25°C. Sofern nicht anders angegeben, werden die nachstehenden Beispiele bei einem Druck der umgebenden Atmosphäre, also etwa bei 1013 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

In der vorliegenden Erfindung werden Stoffe durch Angabe von Daten charakterisiert, die bevorzugt mittels instrumenteller Analytik erhalten werden. Die zugrundeliegenden Messungen werden entweder öffentlich zugänglichen Normen folgend durchgeführt oder nach speziell entwickelten Verfahren ermittelt. Um die Klarheit der mitgeteilten Lehre zu gewährleisten, sind die verwendeten Methoden hier angegeben:

### Viskosität

In den folgenden Beispielen wird die dynamische Viskosität der Organosiliciumverbindungen nach DIN 53019 gemessen. Dabei wurde bevorzugt wie folgt vorgegangen: Die Viskosität wird, sofern nicht anders angegeben, bei 25°C mittels eines Rotationsrheometers "Physica MCR 300" von der Firma Anton Paar gemessen. Dabei wird für Viskositäten von 1 bis 200 mPa·s ein koaxiales Zylinder-Messsystem (CC 27) mit einem Ring-Messspalt von 1,13 mm genutzt und für Viskositäten von größer als 200 mPa·s ein Kegel-Platte-Messsystem (Searle-System mit Messkegel CP 50-1) verwendet. Die Schergeschwindigkeit wird der Polymerviskosität angepasst (1 bis 99 mPa·s bei 100 s⁻¹; 100 bis 999 mPa·s bei 200 s⁻¹; 1000 bis 2999 mPa·s bei 120 s⁻¹; 3000 bis 4999 mPa·s bei 80 s⁻¹; 5000 bis 9999 mPa·s bei 62 s⁻¹; 10000 bis 12499 mPa·s bei 50 s⁻¹; 12500 bis 15999 mPa·s bei 38,5 s⁻¹; 16000 bis 19999 mPa·s bei 33 s⁻¹; 20000 bis 24999 mPa·s bei 25 s⁻¹; 25000 bis 29999 mPa·s bei 20 s⁻¹; 30000 bis 39999 mPa·s bei 17 s⁻¹; 40000 bis 59999 mPa·s bei 10 s⁻¹; 60000 bis 149999 bei 5 s⁻¹; 150000 bis 199999 mPa·s bei 3,3 s⁻¹; 200000 bis 299999 mPa·s bei 2,5 s⁻¹; 300000 bis 1000000 mPa·s bei 1,5 s⁻¹.

Nach Temperierung des Messsystems auf die Messtemperatur wird ein dreistufiges Messprogramm bestehend aus einer Einlaufphase, einer Vorscherung und einer Viskositäts-Messung angewandt. Die Einlaufphase erfolgt durch stufenweise Erhöhung der Schergeschwindigkeit innerhalb einer Minute auf die oben angegebene von der zu erwartenden Viskosität abhängige Schergeschwindigkeit bei der die Messung erfolgen soll. Sobald diese erreicht ist, erfolgt bei konstanter Schergeschwindigkeit die Vorscherung für 30 s, anschließend werden zur Bestimmung der Viskosität 25 Einzelmessungen für je 4,8 s durchgeführt, aus denen der Mittelwert bestimmt wird. Der Mittelwert entspricht der dynamischen Viskosität, die in mPa·s angegeben wird.

### Beschreibung der Bestimmung der Molekulargewichtsverteilungen

Methode: Size Exclusion Chromatography (SEC) nach DIN 55672-1 Durchflussgeschwindigkeit: 1.00 mL/min
Injektionssystem: Autosampler Agilent 1200 (Agilent Technologies)
Injektionsvolumen: 100 µL
Eluent: Im Falle von phenylgruppenhaltigen Produkten wurde Tetrahydrofuran >99.5%, stabilisiert mit 250 ppm 2,6-Di-tert-butyl-4-methylphenol (BHT) verwendet; im Falle von nicht phenylgruppenhaltigen Materialien wurde Toluol >99.9%, p.A., eingesetzt. Alle Chemikalien sind käuflich erhältlich z.B. bei der Firma Merck KGaA, DE-Darmstadt.
Säule: Stationäre Phase: Polystyrol-divinylbenzol von der Firma Agilent Technologies
   Es wurden vier Säulen hintereinandergeschaltet, bestehend aus einer 50 mm langen Vorsäule und drei je 300 mm langen Trennsäulen. Alle Säulen hatten einen Innendurchmesser von 7,8 mm. Die verwendeten Gele hatten eine Partikelgröße von 5 µm. Die Porengröße der Vorsäule betrug 500 Å, die der drei Trennsäulen betrug der Reihenfolge nach 10000 Å, 500 Å und 100 Å.
Säulentemperatur: Ofentemperatur 45°C. Die Konzentration wurde mit einem RI-Detektor ermittelt (Messprinzip Deflexion, Typ: Agilent 1200; Zellvolumen: 8 µL; Temperatur: 45°C Das System wurde mit ebenfalls von der Fa. Agilent käuflich erhältlichen Polystyrolstandards kalibriert. Konzentration: 0.4 g/L (EasiCal, fertige Polystyrol-Kalibriermittel; Injektionsvolumen: 100 µL. Als interner Standard für Toluol als Eluent wurde Tetrahydrofuran als Markersubstanz verwendet und als interner Standard für Tetrahydrofuran als Eluent wurde Toluol als Markersubstanz verwendet. Anpassen von Kalibrierkurven: Polynomeller Fit PSS 3. Ordnung. Probenvorbereitung: Etwa 15 - 50 mg der zu messenden Probe wurden im jeweiligen Eluent gelöst (c = etwa 3 - 10 mg/mL). Die Probenmenge wurde so bemessen, dass ein deutliches RI-Signal erhalten werden konnte. Alle Proben ließen sich vollständig im Eluenten lösen.
Auswertung: Die ermittelten Molgewichte wurden jeweils auf ganze Hunderter gerundet.

### Biegefestigkeit

In der vorliegenden Erfindung wurde die Biegefestigkeit nach ISO 178:2011-04 Verfahren A mit einer Prüfgeschwindigkeit von 2 mm/min bei einer Auflagedistanz von 60 mm gemessen.

Dabei wurde bevorzugt wie folgt vorgegangen: Es wurden Prüfkörper in den Dimensionen Länge x Breite x Dicke = 80 mm x 10 mm x 4 mm verwendet. Die Messungen wurden an jeweils 5 Prüfkörpern durchgeführt. Die Prüfkörper wurden durch Spritzgießverfahren mit einem Werkzeug mit austauschbaren Formnestplatten entsprechend DIN EN ISO 10724-1:2002-04 hergestellt und unter den in den Beispielen angegebenen Bedingungen (Temperatur, Zeit) ausgehärtet. Bei der Prüfung wurden die Probekörper stets so in die Maschine eingelegt, wie sie auch in der Spritzgießform lagen, d.h. mit der Unterseite nach unten. Vor der Messung wurden die Probekörper bei 23°C und 50% rel. Luftfeuchtigkeit für die in den Beispielen angegebene Zeit vorgelagert. Der angegebene Wert für die Biegefestigkeit in MPa entspricht dem jeweiligen Mittelwert der Einzelmessungen, gerundet auf ganze Zahlen entsprechend DIN 1333:1992-02 Abschnitt 4.5.

### Shore-D-Härte:

Die Messung der Härte wurde nach DIN EN ISO 868:2003-10 bestimmt. Dabei wurde bevorzugt wie folgt vorgegangen: Die Messung wurde mit einem Durometer (Shore D-Härte) an Platten-Probekörpern in den Dimensionen Länge x Breite x Dicke = 40 mm x 40 mm x 6 mm durchgeführt, welche durch Spritzgießverfahren mit einem Werkzeug mit austauschbaren Formnestplatten in Anlehnung an DIN EN ISO 10724-1:2002-04 Form 2 hergestellt und unter den in den Beispielen angegebenen Bedingungen (Temperatur, Zeit) ausgehärtet wurden. Vor der Messung wurden die Prüfkörper bei 23°C und 50% rel. Luftfeuchtigkeit für die in den Beispielen angegebene Zeit vorgelagert.

### UV-Beständigkeit:

Die Testung der UV-Beständigkeit wurde mit dem SUNTEST CPS+ der Firma Atlas Material Testing Technology mit den oben genannten Platten-Probekörpern durchgeführt. Es wurde eine künstliche Lichtquelle (Xenon-Lampe) mit einem optischen Filtersystem (beschichtetes Quarzglas mit UV-Spezialglas der Firma Atlas Material Testing Technology), für die Simulation der sichtbaren und ultravioletten Anteile des Tageslichts, gemäß den Festlegungen der CIE-Veröffentlichung Nr. 85 (s. DIN EN ISO 11431:2003-1), verwendet. Die Spektralverteilung der Strahlung entsprach den in ISO 4892-2 (Verfahren A) angegebenen Anforderungen. Im Wellenlängenbereich zwischen 290 nm und 800 nm betrug die Bestrahlungsstärke an der Oberfläche der Probekörper (550 ± 75) W/m². Die Verfärbung der Probekörper wurde an Platten-Probekörpern in den Dimensionen Länge x Breite x Dicke = 40 mm x 40 mm x 6 mm ermittelt, welche nach dem oben beschriebenen Verfahren hergestellt wurden. Die Prüfkörper wurden bei 23°C und 50% rel. Luftfeuchtigkeit für die in den Beispielen angegebene Zeit vorgelagert. Anschließend wurden die Prüfkörper nach den in den Beispielen genannten Lagerungszyklen visuell beurteilt ("++" = keine Verfärbung, "+" = geringe Verfärbung, "O" = mäßige Verfärbung, "-" = starke Verfärbung, "--" sehr starke Verfärbung).

### Thermische Beständigkeit

Zur Testung der thermischen Beständigkeit in Bezug auf Verfärbung wurden Biegefestigkeits-Probekörper verwendet, welche nach dem oben beschriebenen Verfahren hergestellt wurden. Die Prüfkörper wurden bei 23°C und 50 % rel. Luftfeuchtigkeit für die in den Beispielen angegebene Zeit vorgelagert. Anschließend wurden die Prüfkörper für die in den Beispielen angegebene Zeit bei der angegebenen Temperatur in einem handelsüblichen Umluft-Trockenschrank gelagert. Danach wurde die Verfärbung der Probekörper visuell beurteilt ("++" = keine Verfärbung, "+" = geringe Verfärbung, "O" = mäßige Verfärbung, "-" = starke Verfärbung, "--" sehr starke Verfärbung).

Zur Testung der thermischen Beständigkeit in Bezug auf die Biegefestigkeit wurden Biegefestigkeits-Probekörper verwendet, welche nach dem oben beschriebenen Verfahren hergestellt wurden. Die Prüfkörper wurden bei 23°C und 50 % rel. Luftfeuchtigkeit für die in den Beispielen angegebene Zeit vorgelagert. Anschließend wurden die Prüfkörper für die in den Beispielen angegebene Zeit bei der angegebenen Temperatur in einem handelsüblichen Umluft-Trockenschrank gelagert. Danach wurde die Biegefestigkeit wie oben angegeben an den für 2h auf 23°C abgekühlten Probekörpern gemessen. Der angegebene Wert für die Biegefestigkeit in MPa entspricht dem jeweiligen Mittelwert der Einzelmessungen, gerundet auf ganze Zahlen entsprechend DIN 1333:1992-02 Abschnitt 4.5.

**Harzmischung 1:** 100 Gewichtsteile eines pulverförmigen Organopolysiloxanharzes (A1) mit einem mittleren Molekulargewicht Mw von 6600 g/mol, einem mittleren Molekulargewicht Mn von 2000 g/mol und einer Polydispersität von 3,3, der durchschnittlichen Formel (MeSiO_{3/2})_{0,88}(MeSi(OH)O_{2/2})_{0,05}(MeSi(OEt)O_{2/2})_{0,01}(Me₂SiO_{2/2})_{0,01} und 25 Gewichtsteile (2,4,4-Trimethylpentyl)trimethoxysilan, welches eine dynamische Viskosität von 1,8 mPa·s aufweist, wurden in einem Rundkolben vorgelegt. Anschließend wurde die Mischung unter Rühren auf 55°C erwärmt, wobei eine homogene Mischung entstand. Danach wurde die Temperatur des Gemisches auf 95°C erhöht und nach Erreichen dieser Temperatur ein Druck von 100 mbar angelegt. Unter diesen Bedingungen wurden weitere 2,5 Stunden gerührt, danach ließ man das Gemisch bei einem Druck von 100 mbar auf eine Temperatur von 23°C abkühlen, bevor der Unterdruck gebrochen wurde. Die so erhaltene Harzmischung wies eine dynamische Viskosität von 35000 mPa·s bei 25°C und eine dynamische Viskosität von 400 mPa·s bei 80°C auf.

Harzmischung 2: 100 Gewichtsteile eines pulverförmigen Organopolysiloxanharzes (A1) mit einem mittleren Molekulargewicht Mw von 6600 g/mol, einem mittleren Molekulargewicht Mn von 1900 g/mol und einer Polydispersität von 3,5, der durchschnittlichen Formel (MeSiO_{3/2})_{0,84}(MeSi(OH)O_{2/2})_{0,03}(MeSi(OEt)O_{2/2})_{0,06} (Me₂(OH)SiO_{1/2})_{0,01} und 25,5 Gewichtsteile (2,4,4-Trimethylpentyl)trimethoxysilan, welches eine dynamische Viskosität von 1,8 mPa·s aufweist, wurden in einem Rundkolben vorgelegt, anschließend wurde die Mischung unter Rühren auf 55°C erwärmt, wobei eine homogene Mischung entstand. Danach wurde die Temperatur des Gemisches auf 95°C erhöht und nach dem Erreichen dieser Temperatur ein Druck von 100 mbar angelegt. Unter diesen Bedingungen wurden weitere 2,5 Stunden gerührt, danach ließ man das Gemisch bei einem Druck von 100 mbar auf eine Temperatur von 23°C abkühlen bevor der Unterdruck gebrochen wurde. Die so erhaltene Harzmischung wies eine dynamische Viskosität von 9000 mPa·s bei 25°C und eine dynamische Viskosität von 300 mPa·s bei 80°C auf.

**Harzmischung 3:** 100 Gewichtsteile eines pulverförmigen Organopolysiloxanharzes (A1) mit einem mittleren Molekulargewicht Mw von 6600 g/mol, einem mittleren Molekulargewicht Mn von 2000 g/mol und einer Polydispersität von 3,3, der durchschnittlichen Formel
(MeSiO_{3/2})_{0,88}(MeSi(OH)O_{2/2})_{0,05}(MeSi(OEt)O_{2/2})₀,₀₆(MeSiO_{2/2})_{0,01}, 65 Gewichtsteile einer Organosiliciumverbindung mit der durchschnittlichen Zusammensetzung (MeSiO_{3/2})_{0,19}(i-OctSiO_{3/2})_{0,05} (MeSi(OMe)O_{2/2})_{0,30}(i-OctSi(OMe)O_{2/2})_{0,08}(MeSi(OMe)₂O_{1/2})_{0,16} (i-OctSi(OMe)₂O_{1/2})_{0,07}(Me₂SiO_{2/2})_{0,15} mit einem mittleren Molekulargewicht Mw von 1550 g/mol, einem mittleren Molekulargewicht Mn von 550 g/mol und einer Polydispersität von 2,8, wurden in einem Rundkolben vorgelegt. Anschließend wurde die Mischung unter Rühren auf 55°C erwärmt, wobei eine homogene Mischung entstand. Danach wurde die Temperatur des Gemisches auf 95°C erhöht und nach dem Erreichen dieser Temperatur ein Druck von 100 mbar angelegt. Unter diesen Bedingungen wurde weitere 2,5 Stunden gerührt, danach ließ man das Gemisch bei einem Druck von 100 mbar auf eine Temperatur von 23°C abkühlen bevor der Unterdruck gebrochen wurde. Die so erhaltene Harzmischung wies eine dynamische Viskosität von 6000 mPa·s bei 25°C und eine dynamische Viskosität von 200 mPa·s bei 80°C auf.

### Beispiel B1

100 Gewichtsteile Harzmischung 1 und 300 Gewichtsteile Quarzmehl 16900 (käuflich erhältlich bei den Amberger Kaolinwerken, D-Hirschau) wurden in einem Speedmixer™ DAC 150 FVZ von der Firma Hauschild & Co. KG 30 Sekunden bei 3000 U·min⁻¹ vermischt. Die Mischung wurde anschließend stehen gelassen bis sie auf eine Temperatur von 23°C abgekühlt war. Danach wurden 0,16 Gewichtsteile 1,1,3,3-Tetramethylguanidin ("TMG"; CAS-Nr. 80-70-6; käuflich erhältlich bei Sigma-Aldrich^{®}, D-Steinheim) zugegeben und die Mischung nochmals 30 Sekunden bei 2000 U·min⁻¹ vermischt. Anschließend wurden von der Mischung Prüfkörper hergestellt. Dazu wurde eine ölhydraulische Presse vom Typ VSKO 75 der Firma Lauffer GmbH & Co. KG benutzt. Die Presse war mit einem Werkzeug mit austauschbaren Formnestplatten nach DIN EN ISO 10724-1:2002-04 ausgerüstet, womit sich Prüfkörper in den Dimensionen Länge x Breite x Dicke = 80 mm x 10 mm x 4 mm (zur Testung der Biegefestigkeit und der thermischen Beständigkeit) bzw. Länge x Breite x Dicke = 40 mm x 40 mm x 6 mm (zur Testung der Härte und der UV-Beständigkeit) herstellen ließen. Die Form wurde hydraulisch geschlossen mit einer Schließkraft von 140 kN. Die Form hatte die Außenabmessungen Länge x Breite = 450 mm x 450 mm. Der Pressstempel hatte einen Durchmesser von 50 mm. Zum Herstellen der Prüfkörper wurden 100 g der oben beschriebenen Mischung eingefüllt und mit einer Presskraft von 5 kN in das jeweilige Formnest, welches auf eine Temperatur von 120°C vorgeheizt war, eingespritzt. Nachdem die Formnester vollständig ausgefüllt waren stieg die Presskraft auf 25 kN an. An diesem Punkt wurde die Hydraulik abgeschaltet. Während der Aushärtung ließ die Kraft langsam nach und betrug am Ende des gesamten Press- und Aushärtevorgangs 14 kN. Nach 30 Minuten bei 120°C wurde das Werkzeug geöffnet und die Prüfkörper entnommen.

Die so erhaltenen Prüfkörper wurden hinsichtlich ihrer Eigenschaften überprüft. Die Ergebnisse finden sich in den Tabellen 1 bis 6.

### Beispiel B2

Die in Beispiel 1 beschriebene Verfahrensweise wurde wiederholt mit der Abänderung, dass anstelle von Quarzmehl 16900 Quarzmehl Millisil W12 (käuflich erhältlich bei Quarzwerke GmbH, D-Frechen) und anstelle von 0,16 Gewichtsteilen 1,1,3,3-Tetramethylguanidin 1,35 Gewichtsteile Dioctylzinndilaurat (käuflich erhältlich unter der Bezeichnung TIB KAT 216 bei TIB Chemicals, D-Mannheim) eingesetzt wurde.

Die so erhaltenen Prüfkörper wurden hinsichtlich ihrer Eigenschaften überprüft. Die Ergebnisse finden sich in den Tabellen 1 bis 6.

### Beispiel B3

Die in Beispiel 1 beschriebene Verfahrensweise wurde wiederholt mit der Abänderung, dass anstelle von 0,16 Gewichtsteilen 1,1,3,3-Tetramethylguanidin 1,6 Gewichtsteile einer 90 Gew.-%igen Lösung von Zirkonium(IV)2-ethylhexanoat in Testbenzin (CAS-Nr. 2233-42-3; käuflich erhältlich bei ABCR, D-Karlsruhe) eingesetzt wurde.

Die so erhaltenen Prüfkörper wurden hinsichtlich ihrer Eigenschaften überprüft. Die Ergebnisse finden sich in den Tabellen 1 bis 6.

### Beispiel B4

Die in Beispiel 1 beschriebene Verfahrensweise wurde wiederholt mit der Abänderung, dass anstelle von 0,16 Gewichtsteilen 1,1,3,3-Tetramethylguanidin 0,75 Gewichtsteile einer 70 Gew.-%igen Lösung von Bismuth(III)neodecanoat in Neodecansäure (CAS-Nr. 34364-26-6; käuflich erhältlich bei ABCR, D-Karlsruhe) eingesetzt wurde.

Die so erhaltenen Prüfkörper wurden hinsichtlich ihrer Eigenschaften überprüft. Die Ergebnisse finden sich in den Tabellen 1 bis 6.

### Beispiel B5

Die in Beispiel 1 beschriebene Verfahrensweise wurde wiederholt mit der Abänderung, dass zusätzlich zu 100 Gewichtsteilen Harzmischung 1 und 300 Gewichtsteilen Quarzmehl 16900 3 Gewichtsteile Natriumsilikat-Pulver (CAS-Nr. 1344-09-8; käuflich erhältlich unter der Bezeichnung Sikalon A bei Wöllner GmbH & Co. KG, D-Ludwigshafen) und 0,3 Gewichtsteile handelsübliches vollentsalztes Wasser eingemischt wurden.

Die so erhaltenen Prüfkörper wurden hinsichtlich ihrer Eigenschaften überprüft. Die Ergebnisse finden sich in den Tabellen 1 bis 6.

### Beispiel B6

Die in Beispiel 1 beschriebene Verfahrensweise wurde wiederholt mit der Abänderung, dass anstelle von Harzmischung 1 Harzmischung 2 eingesetzt wurde und anstelle von 300 Gewichtsteilen Quarzmehl 16900 180 Gewichtsteile Quarzmehl 16900 und 120 Gewichtsteile Glaskurzfasern (käuflich erhältlich unter der Bezeichnung Glasfaser MF 7904 bei Lanxess GmbH, D-Leverkusen) eingemischt wurden.

Die so erhaltenen Prüfkörper wurden hinsichtlich ihrer Eigenschaften überprüft. Die Ergebnisse finden sich in den Tabellen 1 bis 6.

### Beispiel B7

Die in Beispiel 1 beschriebene Verfahrensweise wurde wiederholt mit der Abänderung, dass anstelle von Harzmischung 1 Harzmischung 3 und anstelle von 0,16 Gewichtsteilen 1,1,3,3-Tetramethylguanidin 0,4 Gewichtsteile 1,1,3,3-Tetramethylguanidin eingesetzt wurde.

Die so erhaltenen Prüfkörper wurden hinsichtlich ihrer Eigenschaften überprüft. Die Ergebnisse finden sich in den Tabellen 1 bis 6.

### Vergleichsbeispiel V1

100 Gewichtsteile einer Lösung von einem ungesättigten Polyester in Styrol mit einem Festgehalt von 62 bis 65 Gew.-% (käuflich erhältlich unter der Bezeichnung Palatal P4-01 bei Büfa GmbH & Co. KG, D-Oldenburg) und 0,05 Gewichtsteile einer 65 Gew.-%igen Lösung Cobalt(II)2-ethylhexanoat in Testbenzin (CAS-Nr. 136-52-7; käuflich erhältlich bei ABCR, D-Karlsruhe) wurden in einem Speedmixer™ DAC 150 FVZ 15 Sekunden bei 3000 U*min⁻¹ vermischt. Danach wurde 1 Gewichtsteil einer 32 Gew.-%igen 2-Butanonperoxid-Lösung (CAS-Nr. 1338-23-4; käuflich erhältlich unter der Bezeichnung Luperox^{®} DHD-9 bei Sigma-Aldrich^{®}, D-Steinheim) hinzugefügt und wieder 15 Sekunden im Speedmixer™ bei 2000 U·min⁻¹ gemischt. Die Mischung wurde mit 300 Gewichtsteilen Quarzmehl 16900 erweitert und nochmals 30 Sekunden im Speedmixer™ bei 2000 U·min⁻¹ gemischt. Die Formnester wurden auf 50°C vorgeheizt. Nach dem Einpressen der Mischung in die Formnester wurde anstelle von 30 Minuten bei 120°C 30 Minuten bei 50°C temperiert. Nach 30 Minuten wurde die Temperatur des Presswerkzeugs auf 80°C erhöht und nach dem Erreichen dieser Temperatur wurden die Formkörper weitere 30 Minuten temperiert. Danach wurde das Werkzeug geöffnet und die Prüfkörper entnommen.

Die so erhaltenen Prüfkörper wurden hinsichtlich ihrer Eigenschaften überprüft. Die Ergebnisse finden sich in den Tabellen 1 bis 6.

**Tabelle 1: 28 Tage Vorlagerung der Probekörper bei 23°C und 50% rel. Feuchte**

| **Beispiel** | **B1** | **B2** | **B3** | **B4** | **B5** | **B6** | **B7** | **V1** |
|---|---|---|---|---|---|---|---|---|
| Härte (Shore D) | 80 | 72 | 70 | 79 | 84 | 83 | 86 | 88 |
| Biegefestigkeit [MPa] | 35 | 33 | 14 | 32 | 46 | 54 | 35 | 71 |

**Tabelle 2: 28 Tage Vorlagerung der Probekörper bei 23°C und 50% rel. Feuchte, anschließend Lagerung für 1 Tag bei 200°C**

| **Beispiel** | **B1** | **B2** | **B3** | **B4** | **B5** | **B6** | **B7** | **V1** |
|---|---|---|---|---|---|---|---|---|
| Härte (Shore D) | | | | | | | 84 | 88 |
| Biegefestigkeit [MPa] | | | | | | | 32 | 91 |
| Visuelle Beurteilung | ++ | ++ | ++ | ++ | ++ | ++ | ++ | O⁽¹⁾ |

| | | | | | | | | |
|---|---|---|---|---|---|---|---|---|
| ⁽¹⁾ äußerlich dunkelgelbe Verfärbung | | | | | | | | |

**Tabelle 3: 28 Tage Vorlagerung der Probekörper bei 23°C und 50% rel. Feuchte, anschließend Lagerung für 7 Tage bei 200°C**

| **Beispiel** | **B1** | **B2** | **B3** | **B4** | **B5** | **B6** | **B7** | **V1** |
|---|---|---|---|---|---|---|---|---|
| Härte (Shore D) | | | | | | | 89 | 94 |
| Biegefestigkeit [MPa] | | | | | | | 32 | 68 |
| Visuelle Beurteilung | ++ | ++ | ++ | ++ | ++ | ++ | ++ | - ⁽¹⁾ |

| | | | | | | | | |
|---|---|---|---|---|---|---|---|---|
| ⁽¹⁾ äußerlich ockerfarbene bis braune, innen dunkelbraune Verfärbung | | | | | | | | |

**Tabelle 4: 28 Tage Vorlagerung der Probekörper bei 23°C und 50% rel. Feuchte, anschließend Lagerung für 2 Stunden bei 300°C**

| **Beispiel** | **B1** | **B2** | **B3** | **B4** | **B5** | **B6** | **B7** | **V1** |
|---|---|---|---|---|---|---|---|---|
| Härte (Shore D) | | | | | | | 84 | 72 |
| Biegefestigkeit [MPa] | | | | | | | 23 | 7 |
| Visuelle Beurteilung | ++ | ++ | ++ | ++ | ++ | ++ | ++ | - - ⁽¹⁾ |

| | | | | | | | | |
|---|---|---|---|---|---|---|---|---|
| ⁽¹⁾ äußerlich und innen starke dunkelbraune Verfärbung | | | | | | | | |

**Tabelle 5: 28 Tage Vorlagerung der Probekörper bei 23°C und 50% rel. Feuchte, anschließend Lagerung für 1 Stunde bei 700°C**

| **Beispiel** | **B7** | **V1** |
|---|---|---|
| Härte (Shore D) | 87 | ⁽¹⁾ |
| Biegefestigkeit [MPa] | 15 | ⁽¹⁾ |
| Visuelle Beurteilung | + ⁽²⁾ | - - |

| | | |
|---|---|---|
| ⁽¹⁾ nicht messbar, da Prüfkörper zersetzt ⁽²⁾ auf der Prüfkörper-Oberfläche bildete sich eine leichte ascheartige abwischbare weiße Ablagerung | | |

**Tabelle 6: 28 Tage Vorlagerung der Probekörper bei 23°C und 50% rel. Feuchte, anschließend UV-Bestrahlung mit einer Xenon-Lichtquelle**

| **Beispiel** | **B1** | **B2** | **B3** | **B4** | **B5** | **B6** | **B7** | **V1** |
|---|---|---|---|---|---|---|---|---|
| Visuelle Beurteilung nach 1000h | ++ | ++ | ++ | ++ | ++ | ++ | ++ | + |
| Visuelle Beurteilung nach 2000h | ++ | ++ | ++ | ++ | ++ | ++ | ++ | O |

## Patentansprüche

1. Härtbare Zusammensetzungen enthaltend
(A1) Harzkomponente bestehend aus mindestens einem Organopolysiloxanharz bestehend aus Einheiten der Formel
Rₐ(OH)_{b}(R¹O)_{c}SiO_{(4-a-b-c)/2} (I),
worin
R gleich oder verschieden sein kann und einen einwertigen, SiC-gebundenen, gegebenenfalls mit Halogenatom substituierter Kohlenwasserstoffrest oder Si-gebundenes Halogenatom bedeutet,
R¹ gleich oder verschieden sein kann und einen einwertigen, gegebenenfalls substituierten Kohlenwasserstoffrest bedeutet,
a 0, 1, 2 oder 3 ist,
b 0, 1, 2 oder 3 ist und
c 0, 1, 2 oder 3 ist,
mit der Maßgabe, dass in Formel (I) die Summe a+b+c≤3 ist,
in der Harzkomponente (A1) in mindestens 2% aller Einheiten der Formel (I) b≥1 ist,
in der Harzkomponente (A1) in höchstens 10% aller Einheiten der Formel (I) c≥1 ist,
in der Harzkomponente (A1) in maximal 50% der Einheiten der Formel (I) a=2 beträgt und
die Harzkomponente (A1) ein mittleres Molekulargewicht Mw (Gewichtsmittel) von 500 g/mol bis 11000 g/mol und ein mittleres Molekulargewicht Mn (Zahlenmittel) von 500 g/mol bis 5000 g/mol aufweist sowie die Polydispersität (Mw/Mn) der Harzkomponente (A1) 1 bis 5 beträgt, wobei Molekulargewichte Mw und Mn gemäß der Methode in der Beschreibung bestimmt werden,
(A2) Organosiliciumkomponente bestehend aus mindestens einer Organosiliciumverbindung bestehend aus Einheiten der Formel
R²_{d}(OH)ₑ(R³O)_{f}SiO_{(4-d-e-f)/2} (II),
worin
R² gleich oder verschieden sein kann und einen einwertigen, SiC-gebundenen, gegebenenfalls mit Halogenatom substituierter Kohlenwasserstoffrest oder Si-gebundenes Halogenatom bedeutet, R³ gleich oder verschieden sein kann und einen einwertigen, gegebenenfalls substituierten Kohlenwasserstoffrest bedeutet,
d 0, 1 oder 2 ist,
e 0, 1, 2 oder 3 ist und
f 0, 1, 2 oder 3 ist,
mit der Maßgabe, dass die Summe in Formel (II) d+e+f≤4 ist,
in der Organosiliciumkomponente (A2) in mindestens 10% aller Einheiten der Formel (II) f≥1 ist,
in der Organosiliciumkomponente (A2) in höchstens 2% aller Einheiten der Formel (II) e≥1 ist und
in der Organosiliciumkomponente (A2) in maximal 50% der Einheiten der Formel (II) mit d+e+f≤3 d=2 beträgt,
und
(B) mindestens einen Füllstoff.

2. Zusammensetzung gemäß Anspruch 1, **dadurch gekennzeichnet, dass** es sich bei Komponente (A1) um eine Harzkomponente (A1-1) bestehend aus mindestens einem Organopolysiloxanharz bestehend aus Einheiten der Formeln
RSiO_{3/2} (III)
und
RSi (OH) O_{2/2} (IV)
sowie gegebenenfalls Einheiten ausgewählt aus der Gruppe bestehend aus Einheiten der Formeln
RSi(OR¹)O_{2/2} (V),
RSi(OR¹)₂O_{1/2} (VI),
R₂SiO_{2/2} (VII)
und
R₂Si(OH)O_{1/2} (VIII),
handelt, worin R und R¹ eine der obengenannten Bedeutungen haben und mit der Maßgabe, dass
in der Harzkomponente (A1-1) die Summe der Einheiten der Formeln (IV) und (VIII) bezogen auf die Gesamtzahl aller Einheiten der Formeln (III) bis (VIII) mindestens 2% beträgt,
in der Harzkomponente (A1-1) die Summe der Einheiten der Formeln (V) und (VI) bezogen auf die Gesamtzahl aller Einheiten der Formeln (III) bis (VIII) höchstens 10% beträgt,
in der Harzkomponente (A1-1) die Summe der Einheiten der Formeln (VII) und (VIII) bezogen auf die Gesamtzahl aller Einheiten der Formeln (III) bis (VIII) maximal 50% beträgt und
die Harzkomponente (A1-1) ein mittleres Molekulargewicht Mw von 500 g/mol bis 11000 g/mol und ein mittleres Molekulargewicht Mn von 500 g/mol bis 5000 g/mol aufweist sowie die Polydispersität (Mw/Mn) der Harzkomponente (A1-1) 1 bis 5 beträgt.

3. Zusammensetzung gemäß Anspruch 1 oder 2, **dadurch gekennzeichnet, dass** Komponente (A1) zu Komponente (A2) in einem Gewichtsverhältnis von 99:1 bis 50:50 eingesetzt wird.

4. Zusammensetzung gemäß einem oder mehreren der Ansprüche 1 bis 3, **dadurch gekennzeichnet, dass** sie Komponenten (A1) und (A2) in einer Gesamtmenge von 1 bis 30 Gewichtsteilen, bezogen auf 100 Gewichtsteile der Zusammensetzung, enthält.

5. Zusammensetzung gemäß einem oder mehreren der Ansprüche 1 bis 4, **dadurch gekennzeichnet, dass** sie Füllstoffe (B) in Mengen von insgesamt 70 bis 99 Gewichtsteilen, bezogen auf 100 Gewichtsteile der Zusammensetzung, enthält.

6. Verfahren zur Herstellung der Zusammensetzungen gemäß einem oder mehreren der Ansprüche 1 bis 5 durch Mischen der einzelnen Komponenten in beliebiger Reihenfolge.

7. Verfahren nach Anspruch 6, **dadurch gekennzeichnet, dass** das Vermischen der Komponenten bei einer Temperatur stattfindet, die mindestens 20 K unter dem Siedepunkt der eingesetzten Organosiliciumkomponente (A2) liegt.

8. Formkörper hergestellt durch Vernetzung der Zusammensetzungen gemäß einem oder mehreren der Ansprüche 1 bis 5 oder hergestellt gemäß Anspruch 6 oder 7.

9. Formkörper gemäß Anspruch 8, **dadurch gekennzeichnet, dass** es sich um künstliche Steine handelt.

10. Verfahren zur Herstellung von künstlichen Steinen, **dadurch gekennzeichnet, dass** die Zusammensetzungen gemäß einem oder mehreren der Ansprüche 1 bis 5 oder hergestellt gemäß Anspruch 6 oder 7 geformt und vernetzen gelassen werden.

## Claims

1. Curable compositions comprising
(A1) resin component comprising at least one organopolysiloxane resin consisting of units of the formula
Rₐ(OH)_{b}(R¹O)_{c}SiO_{(4-a-b-c)/2} (I),
wherein
R may be identical or different and denotes a monovalent, SiC-bonded hydrocarbon radical optionally substituted by halogen atom, or Si-bonded halogen atom,
R¹ may be identical or different and denotes a monovalent, optionally substituted hydrocarbon radical,
a is 0, 1, 2 or 3,
b is 0, 1, 2 or 3 and
c is 0, 1, 2 or 3,
with the proviso that in formula (I) the sum a+b+c<3,
in the resin component (A1) b≥1 in at least 2% of all the units of formula (I),
in the resin component (A1) c≥1 in not more than 10% of all the units of formula (I),
in the resin component (A1) a=2 in at most 50% of the units of formula (I), and
the resin component (A1) has a mean molecular weight Mw (weight average) of from 500 g/mol to 11000 g/mol and a mean molecular weight Mn (number average) of from 500 g/mol to 5000 g/mol, and the polydispersity (Mw/Mn) of the resin component (A1) is from 1 to 5,
wherein molecular weights Mw and Mn are determined by the method in the description,
(A2) organosilicon component consisting of at least one organosilicon compound consisting of units of the formula
R²_{d}(OH)ₑ(R³O)_{f}SiO_{(4-d-e-f)/} (II),
wherein
R² may be identical or different and denotes a monovalent, SiC-bonded hydrocarbon radical optionally substituted by halogen atom, or Si-bonded halogen atom,
R³ may be identical or different and denotes a monovalent, optionally substituted hydrocarbon radical,
d is 0, 1 or 2,
e is 0, 1, 2 or 3 and
f is 0, 1, 2 or 3,
with the proviso that in formula (II) the sum d+e+f≤4, in the organosilicon component (A2) f≥1 in at least 10% of all the units of formula (II),
in the organosilicon component (A2) e≥1 in not more than 2% of all the units of formula (II), and
in the organosilicon component (A2), in at most 50% of the units of formula (II) with d+e+f≤3, d=2,
and
(B) at least one filler.

2. Composition according to Claim 1, **characterized in that** component (A1) is a resin component (A1-1) consisting of at least one organopolysiloxane resin consisting of units of the formulae
RSiO_{3/2} (III)
and
RSi(OH)O_{2/2} (IV)
and optionally units selected from the group consisting of units of the formulae
RSi(OR¹)O_{2/2} (V),
RSi(OR¹)₂O_{1/2} (VI),
R₂SiO_{2/2} (VII)
and
R₂Si(OH)O_{1/2} (VIII),
wherein R and R¹ have one of the above-mentioned meanings and with the proviso that
in the resin component (A1-1), the sum of the units of formulae (IV) and (VIII), based on the total number of all the units of formulae (III) to (VIII), is at least 2%,
in the resin component (A1-1), the sum of the units of formulae (V) and (VI), based on the total number of all the units of formulae (III) to (VIII), is not more than 10%,
in the resin component (A1-1), the sum of the units of formulae (VII) and (VIII), based on the total number of all the units of formulae (III) to (VIII), is at most 50%, and
the resin component (A1-1) has a mean molecular weight Mw of from 500 g/mol to 11000 g/mol and a mean molecular weight Mn of from 500 g/mol to 5000 g/mol, and the polydispersity (Mw/Mn) of the resin component (A1-1) is from 1 to 5.

3. Composition according to Claim 1 or 2, **characterized in that** component (A1) is used relative to component (A2) in a ratio by weight of from 99:1 to 50:50.

4. Composition according to one or more of Claims 1 to 3, **characterized in that** it comprises components (A1) and (A2) in a total amount of from 1 to 30 parts by weight, based on 100 parts by weight of the composition.

5. Composition according to one or more of Claims 1 to 4, **characterized in that** it comprises fillers (B) in total amounts of from 70 to 99 parts by weight, based on 100 parts by weight of the composition.

6. Method for producing the compositions according to one or more of Claims 1 to 5 by mixing the individual components in any desired sequence.

7. Method according to Claim 6, **characterized in that** mixing of the components takes place at a temperature that is at least 20 K below the boiling point of the organosilicon component (A2) that is used.

8. Molded bodies produced by crosslinking the compositions according to one or more of Claims 1 to 5 or produced according to Claim 6 or 7.

9. Molded bodies according to Claim 8, **characterized in that** they are artificial stones.

10. Method for producing artificial stones, **characterized in that** the compositions according to one or more of Claims 1 to 5 or produced according to Claim 6 or 7 are molded and allowed to crosslink.

## Revendications

1. Compositions durcissables, contenant :
(A1) un composant résine constitué par au moins une résine d'organopolysiloxane constituée par des unités de formule
Rₐ(OH)_{b}(R¹O)_{c}SiO_{(4-a-b-c)/2} (I)
dans laquelle
les R peuvent être identiques ou différents, et signifient un radical hydrocarboné monovalent, relié à SiC, éventuellement substitué avec un atome d'halogène, ou un atome d'halogène relié à Si,
les R¹ peuvent être identiques ou différents, et signifient un radical hydrocarboné monovalent, éventuellement substitué,
a signifie 0, 1, 2 ou 3,
b signifie 0, 1, 2 ou 3, et
c signifie 0, 1, 2 ou 3,
à condition que, dans la formule (I), la somme a+b+c ≤ 3,
dans le composant résine (A1), dans au moins 2 % de toutes les unités de formule (I), b ≥ 1,
dans le composant résine (A1), dans au plus 10 % de toutes les unités de formule (I), c ≥ 1,
dans le composant résine (A1), dans au plus 50 % des unités de formule (I), a = 2, et
le composant résine (A1) présente un poids moléculaire moyen Mw (moyenne en poids) de 500 g/mol à 11 000 g/mol et un poids moléculaire moyen Mn (moyenne en nombre) de 500 g/mol à 5 000 g/mol, et la polydispersité (Mw/Mn) du composant de résine (A1) est de 1 à 5,
les poids moléculaires Mw et Mn étant déterminés selon la méthode dans la description,
(A2) un composant organosilicium constitué par au moins un composé d'organosilicium constitué par des unités de formule
R²_{d}(OH)ₑ(R³O)_{f}SiO_{(4-d-e-f)/2} (II)
dans laquelle
les R² peuvent être identiques ou différents, et signifient un radical hydrocarboné monovalent, relié à SiC, éventuellement substitué avec un atome d'halogène, ou un atome d'halogène relié à Si,
les R³ peuvent être identiques ou différents, et signifient un radical hydrocarboné monovalent, éventuellement substitué,
d signifie 0, 1 ou 2, et
e signifie 0, 1, 2 ou 3, et
f signifie 0, 1, 2 ou 3,
à condition que, dans la formule (II), la somme d+e+f ≤ 4,
dans le composant organosilicium (A2), dans au moins 10 % de toutes les unités de formule (II), f ≥ 1,
dans le composant organosilicium (A2), dans au plus 2 % de toutes les unités de formule (II), e ≥ 1, et
dans le composant organosilicium (A2), dans au plus 50 % des unités de formule (II), avec d+e+f ≤ 3, d = 2, et
(B) au moins une charge.

2. Composition selon la revendication 1, **caractérisée en ce que** le composant (A1) est un composant résine (A1-1) constitué par au moins une résine d'organopolysiloxane constituée par des unités de formule
RSiO_{3/2} (III)
et
RSi(OH)O_{2/2} (IV)
ainsi qu'éventuellement des unités choisies dans le groupe constitué par les unités de formule
RSi(OR¹)O_{2/2} (V),
RSi(OR¹)₂O_{1/2} (VI),
R₂SiO_{2/2} (VII)
et
R₂Si(OH)O_{1/2} (VIII),
R et R¹ ayant une des significations indiquées précédemment et à condition que
dans le composant résine (A1-1), la somme des unités de formule (IV) et (VIII) par rapport au nombre total de toutes les unités de formule (III) à (VIII) soit d'au moins 2 %,
dans le composant résine (A1-1), la somme des unités de formule (V) et (VI) par rapport au nombre total de toutes les unités de formule (III) à (VIII) soit d'au plus 10 %,
dans le composant résine (A1-1), la somme des unités de formule (VII) et (VIII) par rapport au nombre total de toutes les unités de formule (III) à (VIII) soit d'au plus 50 %, et
le composant résine (A1-1) présente un poids moléculaire moyen Mw de 500 g/mol à 11 000 g/mol et un poids moléculaire moyen Mn de 500 g/mol à 5 000 g/mol, et la polydispersité (Mw/Mn) du composant de résine (A1-1) est de 1 à 5.

3. Composition selon la revendication 1 ou 2, **caractérisée en ce que** le composant (A1) et le composant (A2) sont utilisés en un rapport en poids de 99:1 à 50:50.

4. Composition selon une ou plusieurs des revendications 1 à 3, **caractérisée en ce qu'**elle contient les composants (A1) et (A2) en une quantité totale de 1 à 30 parties en poids, par rapport à 100 parties en poids de la composition.

5. Composition selon une ou plusieurs des revendications 1 à 4, **caractérisée en ce qu'**elle contient des charges (B) en quantités totales de 70 à 99 parties en poids, par rapport à 100 parties en poids de la composition.

6. Procédé de fabrication des compositions selon une ou plusieurs des revendications 1 à 5 par mélange des composants individuels dans un ordre quelconque.

7. Procédé selon la revendication 6, **caractérisé en ce que** le mélange des composants a lieu à une température qui se situe au moins 20 K en dessous du point d'ébullition du composant organosilicium (A2) utilisé.

8. Corps moulés fabriqués par réticulation des compositions selon une ou plusieurs des revendications 1 à 5 ou fabriquées selon la revendication 6 ou 7.

9. Corps moulés selon la revendication 8, **caractérisés en ce qu'**il s'agit de pierres artificielles.

10. Procédé de fabrication de pierres artificielles, **caractérisé en ce que** les compositions selon une ou plusieurs des revendications 1 à 5 ou fabriquées selon la revendication 6 ou 7 sont façonnées et laissées réticuler.
